# EUROPÄISCHE PATENTSCHRIFT

(11) **EP 2 590 357 B1**
(45) Veröffentlichungstag und Bekanntmachung des Hinweises auf die Patenterteilung: **01.08.2018**
(21) Anmeldenummer: 12007420.8
(22) Anmeldetag: 30.10.2012
(51) Int. Cl.: H04L 9/32

(54) **Verfahren und System zur Identifizierung eines RFID-Tags durch ein Lesegerät**
Method and system for identifying an RFID tag by means of a reader
Procédé et système d'identification d'une étiquette RFID par un appareil de lecture

(30) Priorität: 07.11.2011 DE 102011117931
(43) Veröffentlichungstag der Anmeldung: 08.05.2013
(73) Patentinhaber: Giesecke+Devrient Mobile Security GmbH, 81677 München (DE)
(72) Erfinder: Finkenzeller, Klaus, 85774 Unterföhring (DE); Schulz, Katharina, 81927 München (DE)

(56) Entgegenhaltungen:
- IRFAN SYAMSUDDIN ET AL: "A Survey of RFID Authentication Protocols Based on Hash-Chain Method", 2008 THIRD INTERNATIONAL CONFERENCE ON CONVERGENCE AND HYBRID INFORMATION TECHNOLOGY, 1. November 2008 (2008-11-01), Seiten 559-564, XP55055432, DOI: 10.1109/ICCIT.2008.314 ISBN: 978-0-76-953407-7
- LAMPORT L: "PASSWORD AUTHENTICATION WITH INSECURE COMMUNICATION", COMMUNICATIONS OF THE ACM, ASSOCIATION FOR COMPUTING MACHINERY, INC, UNITED STATES, Bd. 24, Nr. 11, 1. November 1981 (1981-11-01), Seiten 770-772, XP000577349, ISSN: 0001-0782, DOI: 10.1145/358790.358797
- JIHWAN LIM ET AL: "A New Hash-Based RFID Mutual Authentication Protocol Providing Enhanced User Privacy Protection", 7. Mai 2007 (2007-05-07), INFORMATION SECURITY PRACTICE AND EXPERIENCE; [LECTURE NOTES IN COMPUTER SCIENCE], SPRINGER BERLIN HEIDELBERG, BERLIN, HEIDELBERG, PAGE(S) 278 - 289, XP019088324, ISBN: 978-3-540-79103-4 * das ganze Dokument *
- OHKUBO ET AL: "A cryptographic approach to privacy-friendly tags", INTERNET CITATION, 1. Januar 2003 (2003-01-01), XP002481180, Gefunden im Internet: URL:http://www.avoine.net/download/papers/ OhkuboSK-2003-mit-paper.pdf [gefunden am 2013-03-06]

## Beschreibung

Die Erfindung betrifft Verfahren und Systeme zur Identifizierung eines RFID-Tags durch ein Lesegerät sowie entsprechende RFID-Tags und entsprechende Lesegeräte.

Die RFID-Technologie ("radio frequency identification") ermöglicht insbesondere die automatische Identifizierung und Lokalisierung von Personen und Objekten und findet zunehmend Verbreitung in einer Vielzahl von Anwendungsbereichen, wie beispielsweise beim Supply Chain Management, bei Zugangskontrollsystemen, bei Systemen zur Diebstahlsicherung von Waren, beim elektronischen Ticketing und dergleichen. Ein RFID-System besteht in der Regel aus einem RFID-Tag (auch Transponder genannt), das eine Person mit sich führt bzw. an einem Objekt angebracht ist und einen das RFID-Tag eindeutig identifizierenden Identifikationscode (dem Fachmann auch als "Unique Item Identifier" (UII) bekannt) enthält, sowie einem Lesegerät zum kontaktlosen Auslesen des Identifikationscodes des RFID-Tags. Dabei ist das Lesegerät üblicherweise nur ein Lesegerät einer Vielzahl von Lesegeräten, die über ein Hintergrundsystem auf dort hinterlegte Daten einer Vielzahl von RFID-Tags zugreifen können.

Insbesondere für Logistikanwendungen und für das Supply Chain Management vorgesehene kostengünstige RFID-Tags, bei denen es sich in der Regel um passive RFID-Tags handelt, die die für den Betrieb benötigte Energie aus dem elektromagnetischen Feld eines Lesegeräts beziehen, weisen häufig keine Sicherheitsmaßnahmen auf, die das unberechtigte Auslesen des Identifikationscodes eines solchen RFID-Tags verhindern können. Dies ist beispielsweise bei UHF-RFID-Tags der Fall, die dem Fachmann unter dem Namen Class-1 Gen-2 EPC-Tags bekannt sind, d.h. RFID-Tags, die gemäß dem Standard EPC Class 1 Generation 2 bzw. dem neueren Standard ISO/IEC 18000-63 ausgebildet sind. Wie dies dem Fachmann bekannt ist, umfasst der Begriff "Class-1 Gen-2 EPC-Tags" auch Tags nach dem Standard ISO/IEC 18000-63. Bei derartigen RFID-Tags wird der eindeutige Identifikationscode als EPC ("Electronic Product Code") bezeichnet, bei dem es sich üblicherweise um eine aus 96 Bits bestehende, in einem jeweiligen RFID-Tag hinterlegte Bitfolge handelt. Der EPC wird bei einem Auslesevorgang eines EPC-Tags im Klartext ohne Authentisierung an ein Lesegerät übertragen und kann somit sowohl aktiv durch das Lesegerät eines unberechtigten Dritten als auch passiv abgegriffen werden, indem ein Dritter den ungesicherten Kommunikationskanal, d.h. die Luftschnittstelle, zwischen dem RFID-Tag und einem Lesegerät abhört. Dies führt zu zwei potentiellen Problemen, nämlich zum einen dazu, dass die Position des RFID-Tags durch einen unberechtigten Dritten verfolgt werden kann, was auch als Tracking eines RFID-Tags bezeichnet wird, und zum anderen dazu, dass ein Dritter den ausgelesenen EPC in ein neues, gefälschtes RFID-Tag kopieren kann und sich somit das neue, gefälschte RFID-Tag als das Tag ausgeben kann, aus dem der EPC ursprünglich ausgelesen worden ist, was auch als Klonen eines RFID-Tags bezeichnet wird.

Um das Tracking und Klonen insbesondere von EPC-Tags verhindern zu können, lehrt die US 2007/0194889 den Auslesevorgang des EPC-Tags mittels einer Challenge-Response-Authentisierung abzusichern. Dabei erfolgt die Kommunikation von einem Lesegerät zum RFID-Tag mittels APDUs ("application data units"), die in das in der Norm ISO/IEC 18000-63 definierte "BlockWrite"-Kommando eingebettet sind, das eine APDU in einen von außen frei zugänglichen Bereich des Speichers des RFID-Tags schreibt. Von dort wird eine APDU von der Prozessoreinrichtung des RFID-Tags ausgelesen, interpretiert und bearbeitet. Die Antwort-APDU wird dann wieder in den von außen frei zugänglichen Bereich des Speichers zurückgeschrieben und kann dort vom Lesegerät mit einem "Read"-Kommando ausgelesen werden. Das in der US 2007/0194889 beschriebene Verfahren schützt ein RFID-System durch den abgesicherten Auslesevorgang zwar davor, dass EPC-Tags durch einen unberechtigten Dritten ausgelesen und somit getrackt oder geklont werden können, ist jedoch aufgrund der bei jedem Auslesevorgang verwendeten Challenge-Response-Authentisierung verhältnismäßig aufwendig.

In IRFAN SYAMSUDDIN et.al "A Survey of RFID Authentication Protocols Based on Hash-Chain Method", 3. International Conference on Convergence and Hybrid Information Technology, 1. November 2008, Seiten 559 bis 564 wird RFID-Kommunikation diskutiert, wobei die Anwendung von Verfahren auf der Basis von HASH-Ketten-Algorithmen als gutes Mittel angesehen wird, um die Sicherheit und Privatsphäre derartiger Kommunikation zu verbessern. Dabei werden dynamische Identifikationscodes mittels einer HASH-Funktion auf Basis einer Initial-Information rekursiv N-fach abgeleitet. Anschließend wird ein dynamischer ID-code übertragen, um den RFID-Tag zu identifizieren.

In LAMPORT "Password Authentication with Insecure Communication", Communications of the ACM, Band 24, Nr.11, 1. November 1981, Seiten 770 bis 772 wird ein Verfahren zur manipulationssicheren Passwort-Authentifizierung beschrieben. Dabei wird ein Passwort durch rekursive Anwendung einer Einwegfunktion codiert. Eine Abhörung eines derart codierten Passwortes wäre wirkungslos, wenn eine Sequenz aus Passwörtern verwendet wird, wobei diese Sequenz umgedreht angewendet wird.

Vor diesem Hintergrund stellt sich der vorliegenden Erfindung das Problem, verbesserte Verfahren und Systeme zur Identifizierung eines RFID-Tags mit eingeschränkten Sicherheitsmechanismen durch ein Lesegerät bereitzustellen, die das RFID-Tag insbesondere davor schützen, getrackt und/oder geklont zu werden. Ferner sollen ein entsprechend ausgestaltetes RFID-Tag sowie ein entsprechend ausgestaltetes Lesegerät bereitgestellt werden.

Diese Aufgabe wird erfindungsgemäß durch den Gegenstand der unabhängigen Ansprüche gelöst. Vorteilhafte Weiterbildungen der Erfindung sind in den abhängigen Ansprüchen definiert.

Die Erfindung geht von dem Grundgedanken aus, ein RFID-Tag, statt mit einem gemäß dem Stand der Technik "statischen" Identifikationscode (auch als "Unique Item Identifier" (UII) oder Tag-ID bekannt), mit einem sich von Auslesevorgang zu Auslesevorgang ändernden Identifikationscode zu versehen, der hier als "dynamischer" Identifikationscode bezeichnet wird, und diesen zur eindeutigen Identifizierung des RFID-Tags zu verwenden. Hierzu wird zwischen dem RFID-Tag und einem Lesegerät ein Satz von dynamischen
schen Identifikationscodes mit einer definierten Reihenfolge vereinbart. Dabei ist der Satz von dynamischen Identifikationscodes und dessen Reihenfolge so gewählt, dass es einem Angreifer nicht möglich ist, mittels eines dynamischen Identifikationscodes den in der vereinbarten Reihenfolge unmittelbar folgenden dynamischen Identifikationscode zu bestimmen. Pro Auslesevorgang wird von dem RFID-Tag ein Identifikationscode an das Lesegerät übermittelt, und zwar in der zwischen dem RFID-Tag und dem Lesegerät vereinbarten Reihenfolge. Das Lesegerät kann mittels des übermittelten Identifikationscodes das RFID-Tag eindeutig identifizieren. Falls der zwischen dem RFID-Tag und dem Lesegerät vereinbarte Satz von Identifikationscodes aufgebraucht ist, vereinbaren das Lesegerät und das RFID-Tag im Rahmen eines Synchronisationsprozesses die jeweilige Ableitung eines neuen Satzes von dynamischen Identifikationscodes mit einer definierten Reihenfolge.

Ein besonderer Vorteil der erfindungsgemäßen Lösung besteht darin, dass der im Klartext vom RFID-Tag ausgesendete dynamische Identifikationscode zwar ebenfalls von einem Lesegerät eines unbefugten Dritten ausgelesen oder abgehört werden kann, dieses jedoch nicht dazu in der Lage ist, erstens den Identifikationscode eindeutig einem RFID-Tag zuzuordnen und zweitens aufgrund der Eigenschaften des von dem RFID-Tags verwendeten Algorithmus zur Ableitung des Satzes von dynamischen Identifikationscodes mittels eines abgefangenen dynamischen Identifikationscodes den nächsten dynamischen Identifikationscode zu bestimmen, so dass ein Tracking des RFID-Tags nicht möglich ist. Ferner ist aufgrund des sich von Auslesevorgang zu Auslesevorgang ändernden dynamischen Identifikationscodes ein Klonen des RFID-Tags nicht möglich.

Auf der Grundlage des vorstehend beschriebenen Grundgedankens der vorliegenden Erfindung wird gemäß einem ersten Aspekt der Erfindung ein Verfahren zur Kommunikation zwischen einem RFID-Tag und einem Lesegerät bereitgestellt. Dabei wird bei jedem Auslesevorgang des RFID-Tags durch das Lesegerät ein sich von Auslesevorgang zu Auslesevorgang ändernder, d.h. dynamischer Identifikationscode eines Satzes von N dynamischen Identifikationscodes an das Lesegerät übertragen, um das RFID-Tag eindeutig identifizieren zu können. Der Satz von N dynamischen Identifikationscodes wird unter Verwendung einer schlüsselabhängigen Einwegfunktion abgeleitet, wobei die schlüsselabhängige Einwegfunktion rekursiv N-mal auf einen Startwert angewendet wird und der sich dabei ergebende Satz von N Funktionswerten der schlüsselabhängigen Einwegfunktion zur Ableitung des Satzes von N dynamischen Identifikationscodes verwendet wird.

Vorzugsweise wird bei der Ableitung des Satzes von N dynamischen Identifikationscodes die Reihenfolge des Satzes von N Funktionswerten, die sich aus der rekursiven Anwendung der schlüsselabhängigen Einwegfunktion ergeben, umgedreht. Mit anderen Worten: mittels des Funktionswerts, der sich aus der m-fachen rekursiven Anwendung der schlüsselabhängigen Einwegfunktion auf den Startwert ergibt, wird der ((N+1)-m)-te dynamische Identifikationscode bestimmt, wobei 1 ≤ m ≤ N.

Vorzugsweise handelt es sich bei der schlüsselabhängigen Einwegfunktion um einen Message Authentication Code, wie beispielsweise HMAC, CMAC, CBC-MAC oder dergleichen.

Gemäß einem zweiten Aspekt der Erfindung wird ein Verfahren zur Kommunikation zwischen einem RFID-Tag und einem Lesegerät beschrieben. Dabei wird bei jedem Auslesevorgang des RFID-Tags durch das Lesegerät ein sich von Auslesevorgang zu Auslesevorgang ändernder, d.h. dynamischer Identifikationscode eines Satzes von N dynamischen Identifikationscodes an das Lesegerät übertragen, um das RFID-Tag eindeutig identifizieren zu können. Der Satz von N dynamischen Identifikationscodes wird unter Verwendung einer Einwegfunktion, vorzugsweise einer Hashfunktion, abgeleitet, wobei die Einwegfunktion rekursiv N-mal auf einen Startwert angewendet wird und der sich dabei ergebende Satz von N Funktionswerten der Einwegfunktion zur Ableitung des Satzes von N dynamischen Identifikationscodes verwendet wird. Bei der Ableitung des Satzes von N dynamischen Identifikationscodes wird die Reihenfolge des Satzes von N Funktionswerten umgedreht, die sich aus der rekursiven Anwendung der Einwegfunktion ergeben. Mit anderen Worten: mittels des Funktionswerts, der sich aus der m-fachen rekursiven Anwendung der Einwegfunktion auf den Startwert ergibt, wird der ((N+1)-m)-te dynamische Identifikationscode bestimmt, wobei 1 ≤ m ≤ N.

Nachstehend werden weitere bevorzugte Ausgestaltungen der Erfindung beschrieben, die vorteilhafte Weiterbildungen des Verfahrens gemäß dem ersten Aspekt der Erfindung und des Verfahrens gemäß dem zweiten Aspekt der Erfindung darstellen, sofern nicht ausdrücklich angegeben wird, dass eine bevorzugte Ausgestaltung eine vorteilhafte Weiterbildung nur eines dieser Aspekte ist.

Vorzugsweise ist das Lesegerät nur ein Lesegerät einer Vielzahl von Lesegeräten, die über ein Hintergrundsystem miteinander verbunden sind und auf im Hintergrundsystem hinterlegte Daten zugreifen können, die jeweils mit einem jeweiligen RFID-Tag verknüpft sind.

Gemäß einer bevorzugten Ausführungsform wird im Rahmen eines Initialisierungs- bzw. Personalisierungsprozesses in einer sicheren Umgebung, beispielsweise beim Hersteller und/oder Herausgeber des RFID-Tags, wenigstes ein Schlüssel in dem RFID-Tag und dem Lesegerät und/oder einem mit diesem verbundenen Hintergrundsystem hinterlegt, der in die Ableitung des Satzes von N dynamischen Identifikationscodes einfließt. Bei dem wenigstens einen Schlüssel kann es sich um einen Systemschlüssel, d.h. um einen auf allen RFID-Tags hinterlegten Schlüssel, und/oder um einen Tag-individuellen Schlüssel, d.h. um einen jeweils nur auf einem RFID-Tag hinterlegten Schlüssel, handeln. Vorzugsweise wird dieser Schlüssel als Masterkey zur Ableitung eines jeweiligen Session-Keys verwendet, wobei in diesem Fall der jeweilige Session-Key in die Ableitung des Satzes von N dynamischen Identifikationscodes einfließt. Zur Ableitung eines jeweiligen Session-Keys kann im Rahmen des Initialisierungsprozess und/oder im Feld zwischen dem RFID-Tag und dem Lesegerät eine Zufallszahl ausgetauscht werden.

Gemäß dem ersten Aspekt der Erfindung kann ein solcher Schlüssel in die Ableitung des Satzes von dynamischen Identifikationscodes einfließen, indem der Schlüssel bei der schlüsselabhängigen Einwegfunktion eingesetzt wird.

Gemäß dem zweiten Aspekt der Erfindung kann ein solcher Schlüssel in die Ableitung des Satzes von N dynamischen Identifikationscodes einfließen, indem der Startwert, auf den die Einwegfunktion rekursiv N-mal angewendet wird, aus dem Schlüssel abgeleitet wird, beispielsweise indem der Schlüssel mit einer zwischen dem RFID-Tag und dem Lesegerät vereinbarten Zufallszahl verkettet oder mittels der XOR-Operation verknüpft wird.

Vorzugsweise wird im Rahmen des Initialisierungs- bzw. Personalisierungsprozesses zwischen dem RFID-Tag und dem Lesegerät ferner die Zahl N vereinbart, die die Anzahl der abzuleitenden Elemente des Satzes von dynamischen Identifikationscodes bestimmt. Zusätzlich oder alternativ kann die Anzahl der abzuleitenden Elemente des Satzes von dynamischen Identifikationscodes auch erst dann vereinbart werden, wenn sich das RFID-Tag bereits im Feld befindet.

Gemäß einer bevorzugten Ausführungsform wird für den Fall, dass das RFID-Tag anhand des dynamischen Identifikationscodes nicht vom Lesegerät identifiziert werden kann, vom Lesegerät ein Synchronisationsprozess zwischen dem Lesegerät und dem RFID-Tag angestoßen, im Rahmen dessen ein neuer Satz von dynamischen Identifikationscodes abgeleitet wird.

Vorzugsweise wird bei jedem Synchronisationsprozess ein neuer Startwert zur Ableitung des neuen Satzes von dynamischen Identifikationscodes verwendet. Als neuer Startwert oder als Ausgangspunkt zur Berechnung eines neuen Startwerts kann vorzugsweise der vom Lesegerät nicht identifizierbare dynamische Identifikationscode verwendet werden, d.h. der zuletzt vom RFID-Tag an das Lesegerät übertragene dynamische Identifikationscode. Beispielsweise kann beim Verfahren gemäß dem ersten Aspekt der Erfindung die schlüsselabhängige Einwegfunktion zunächst auf den nicht identifizierbaren dynamischen Identifikationscode angewendet werden. Vorzugsweise wird hierbei ein Session-Key verwendet, der aus dem nicht identifizierbaren dynamischen Identifikationscode und dem Systemschlüssel abgleitet wird, der in dem RFID-Tag und in dem Lesegerät und/oder in dem mit diesem verbundenen Hintergrundsystem hinterlegt ist.

Gemäß einer bevorzugten Ausführungsform kann im Rahmen des Synchronisationsprozesses vom RFID-Tag eine im RFID-Tag hinterlegte eindeutige statische Seriennummer (Tag-ID) in verschlüsselter Form an das Lesegerät übertragen werden, die eine eindeutige Identifizierung des RFID-Tags ermöglicht.

Vorzugsweise wird im Rahmen des Synchronisationsprozesses eine Challenge-Response-Authentisierung durchgeführt, bei der auf Seiten des RFID-Tags und auf Seiten des Lesegeräts ein Session-Key verwendet wird. Gemäß einer bevorzugten Ausführungsform wird der Session-Key aus dem nicht identifizierbaren dynamischen Identifikationscode und dem Systemschlüssel abgleitet, der in dem RFID-Tag und in dem Lesegerät und/oder in dem mit diesem verbundenen Hintergrundsystem hinterlegt ist.

Bei dieser bevorzugten Ausführungsform wird vorzugsweise bei der Challenge-Response-Authentisierung eine Zufallszahl mittels des Session-Keys verschlüsselt und in verschlüsselter Form als Challenge an das RFID-Tag übertragen.

Vorzugsweise werden alle im Rahmen des Initialisierungs- bzw. Personalisierungsprozesses und/oder des Synchronisationsprozesses abgeleiteten dynamischen Identifikationscodes im RFID-Tag und/oder im Lesegerät (und/ oder in dem mit diesem verbundenen Hintergrundsystem) hinterlegt.

Alternativ werden im Rahmen des Initialisierungs- bzw. Personalisierungsprozesses und/oder des Synchronisationsprozesses im RFID-Tag lediglich die in die Ableitung der dynamischen Identifikationscodes einfließenden Parameter hinterlegt, insbesondere der Startwert und die Zahl N. Bei dieser Ausführungsalternative wird ein entsprechender dynamischer Identifikationscode bei jedem Auslesevorgang "on the fly" durch das RFID-Tag berechnet.

Gemäß einer weiteren Alternative kann im Lesegerät (und/ oder in dem mit diesem verbundenen Hintergrundsystem) im Rahmen des Initialisierungs- bzw. Personalisierungsprozesses und/ oder des Synchronisationsprozesses lediglich der erste dynamische Identifikationscode des Satzes von dynamischen Identifikationscodes hinterlegt werden.

Vorzugsweise besteht ein dynamischer Identifikationscode aus einem statischen Anteil und einem dynamischen Anteil, der hier als (dynamisches) Identifikationselement bezeichnet wird.

Gemäß einer bevorzugten Ausführungsform handelt es sich bei dem RFID-Tag um ein UHF-Tag nach dem Standard ISO/IEC 18000-63 bzw. dem Standard Class-1 Gen-2 EPC.

Vorzugsweise ist der dynamische Identifikationscode derart als modifizierter EPC ausgestaltet, dass die ersten 60 Bits des Identifikationscodes dieselben Bedeutungen wie die ersten 60 Bits eines "registrierten" EPC haben und die verbleibenden 36 Bits des Identifikationscodes das dynamische Identifikationselement ausbilden. Selbstverständlich kann die Aufteilung des dynamischen Identifikationscodes jedoch auch anders vorgenommen werden, beispielsweise wenn ein EPC mit mehr oder weniger als 96 Bits verwendet wird.

Gemäß weiterer Aspekte der Erfindung werden ein RFID-Tag und ein Lesegerät bereitgestellt, die jeweils dazu ausgestaltet sind, die Verfahren gemäß dem ersten oder dem zweiten Aspekt der Erfindung durchzuführen, sowie ein System mit wenigstens einem solchen RFID-Tag und wenigstens einem solchen Lesegerät.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
Fig. 1 eine schematische Darstellung eines Systems zur Kommunikation zwischen einem RFID-Tag und einem Lesegerät gemäß einer bevorzugten Ausführungsform der Erfindung,
Fig. 2 eine schematische Detailansicht eines RFID-Tags des Systems von Figur 1,
Fig. 3 eine schematische Darstellung des Formats eines dynamischen Identifikationscodes gemäß einer bevorzugten Ausführungsform der Erfindung,
Fig. 4 eine schematische Darstellung von Daten für mehrere RFID-Tags in Tabellenform, die gemäß einer bevorzugten Ausführungsform der Erfindung in einem Lesegerät und/oder dem Hintergrundsystem des Systems von Figur 1 hinterlegt sein können,
Fig. 5 eine schematische Darstellung eines Initialisierungs- bzw. Personalisierungsprozesses zwischen einem RFID-Tag und einem Lesegerät des Systems von Figur 1 gemäß einer bevorzugten Ausführungsform der Erfindung,
Fig. 6 eine schematische Darstellung eines Auslesevorgangs zwischen einem RFID-Tag und einem Lesegerät des Systems von Figur 1 gemäß einer bevorzugten Ausführungsform der Erfindung,
Fig. 7 eine schematische Darstellung eines Synchronisationsprozesses zwischen einem RFID-Tag und einem Lesegerät des Systems von Figur 1 gemäß einer bevorzugten Ausführungsform der Erfindung,
Fig. 8 eine schematische Darstellung eines Initialisierungs- bzw. Personalisierungsprozesses zwischen einem RFID-Tag und einem Lesegerät des Systems von Figur 1 gemäß einer erfindungsgemäßen Variante,
Fig. 9 eine schematische Darstellung eines Auslesevorgangs zwischen einem RFID-Tag und einem Lesegerät des Systems von Figur 1 gemäß einer weiteren erfindungsgemäßen Variante, und
Fig. 10 eine schematische Darstellung eines Synchronisationsprozesses zwischen einem RFID-Tag und einem Lesegerät des Systems von Figur 1 gemäß einer noch weiteren erfindungsgemäßen Variante.

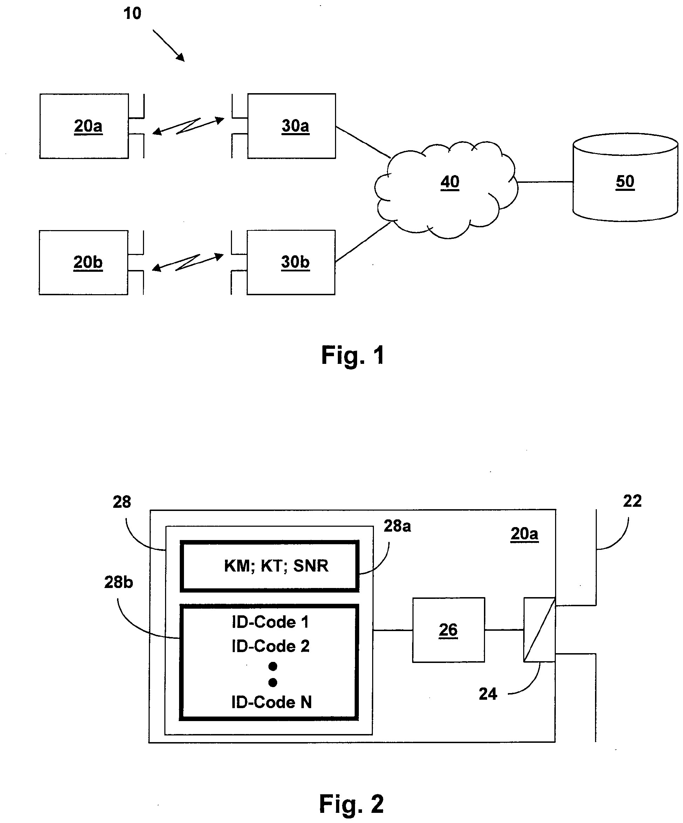

Figur 1 zeigt eine schematische Darstellung eines Systems 10 zur Kommunikation zwischen einem RFID-Tag und einem Lesegerät gemäß einer bevorzugten Ausführungsform der Erfindung. Das System 10 umfasst beispielhaft zwei RFID-Tags, nämlich das RFID-Tag 20a und das RFID-Tag 20b, die jeweils über die Luftschnittstelle mit einem Lesegerät 30a bzw. einem Lesegerät 30b kommunizieren können, in dessen Kommunikations- bzw. Lesebereich sich das jeweilige RFID-Tag 20a, 20b befindet. Vorzugsweise handelt es sich bei den RFID-Tags 20a, 20b um RFID-Tags gemäß dem Standard ISO/IEC 18000-63 bzw. EPC Class 1 Generation 2, die hier als EPC Tags bezeichnet werden. Alternativ kann es sich bei den RFID-Tags 20a, 20b um RFID-Tags handeln, die gemäß einer anderen oder keiner Norm ausgestaltet sind und die keine oder nur unzureichende Sicherheitsmechanismen gegenüber einem ungesicherten Auslesen der auf den jeweiligen RFID-Tags hinterlegten Daten durch einen unberechtigten Dritten aufweisen, die eine eindeutige Identifizierung des RFID-Tags ermöglichen.

Die Lesegeräte 30a, 30b sind über ein geeignetes Kommunikationsnetzwerk 40 mit einem Hintergrundsystem bzw. Backendsystem 50 verbunden, in dem vorzugsweise in einer oder mehreren Datenbanken davon für jedes RFID-Tag des Systems 10 Daten zur Identifizierung der mit den Lesegeräten 30a, 30b kommunizierenden RFID-Tags 20a, 20b sowie mit diesen RFID-Tags 20a, 20b verknüpfte Daten hinterlegt sind, wie dies nachstehend im Detail beschrieben wird. Neben den Lesegeräten 30a, 30b können in das in Figur 1 dargestellte System 10 noch eine Vielzahl weiterer Lesegeräte integriert sein, die über das Kommunikationsnetzwerk 40 mit dem Hintergrundsystem 50 in Kommunikation stehen und auf die dort hinterlegten Daten zugreifen können. Der Übersichtlichkeit halber sind in Figur 1 lediglich zwei RFID-Lesegeräte 30a, 30b und zwei RFID-Tags, nämlich die RFID-Tags 20a, 20b, dargestellt. Selbstverständlich ist das in Figur 1 dargestellte System 10 jedoch dazu ausgestaltet, dass neben den RFID-Tags 20a, 20b noch eine Vielzahl weiterer RFID-Tags in diesem System betrieben werden können.

Figur 2 zeigt eine Detailansicht des beispielhaften RFID-Tags 20a des Systems 10 von Figur 1, in der die für die vorliegende bevorzugte Ausführungsform der Erfindung wesentlichen Komponenten des RFID-Tags 20a schematisch dargestellt sind. Das RFID-Tag 20a, dessen Aufbau bevorzugt identisch zu dem Aufbau des RFID-Tags 20b sein kann, aber nicht sein muss, umfasst eine Antenneneinrichtung 22 zur Kommunikation über die Luftschnittstelle mit den Lesegeräten 30a, 30b des Systems 10 von Figur 1. Die Antenneneinrichtung 22 steht über eine Input-/ Output-Schnittstelle 24 in Kommunikation mit einer Prozessoreinrichtung 26, die auf einen Speicher 28 des RFID-Tags 20a zum Speichern und zum Auslesen von Daten zugreifen kann. Der in Figur 2 dargestellte Speicher 28 des RFID-Tags 20a, bei dem es sich beispielsweise um ein ROM und/oder EEPROM (Flash-Speicher) handeln kann, ist beispielhaft in zwei Speicherbereiche 28a und 28b unterteilt. In diesen Speicherbereichen 28a und 28b sind die Daten, die für die bevorzugte, nachstehend im Detail beschriebene erfindungsgemäße Kommunikation des RFID-Tags 20a mit einem der Lesegeräte 30a, 30b verwendet werden, hinterlegt bzw. können dort hinterlegt werden. Dabei sind die Speicherbereiche 28a und 28b des RFID-Tags 20a vorzugsweise als gesicherte Speicherbereiche ausgestaltet, in denen ein oder mehrere elektronische Schlüssel, beispielsweise die nachstehend detaillierter beschriebenen Schlüssel KM und KT, sowie eine Seriennummer SNR, die eine Tag-ID darstellt und somit eine eindeutige Identifizierung des RFID-Tags 20a ermöglicht, und zum anderen ein Satz von N nachstehend im Detail beschriebenen dynamischen Identifikationscodes sicher hinterlegt sein können. Bei der eindeutigen Seriennummer SNR kann es sich beispielsweise um die Seriennummer, die Teil des dem Fachmann aus dem EPC Standard bekannten Electronic Product Codes (EPC) ist, oder um den EPC selbst handeln.

Neben dem Zugriff auf den Speicher 28 des RFID-Tags 20a ist vorzugsweise die Prozessoreinrichtung 26 des RFID-Tags 20a dazu ausgestaltet, einen Satz von dynamischen Identifikationscodes zur Identifizierung des RFID-Tags 20a z.B. im Rahmen des nachstehend beschriebenen Initialisierungs- bzw. Personalisierungsprozesses zwischen dem RFID-Tag 20a und dem Lesegerät 30a (und/ oder dem mit diesem verbundenen Hintergrundsystem 50) abzuleiten, die, wie bereits oben erwähnt, im gesicherten Bereich 28b des Speichers 28 des RFID-Tags 20a hinterlegt werden können.

Wie bereits vorstehend beschrieben, handelt es sich bei den RFID-Tags 20a, 20b vorzugsweise um UHF-RFID-Tags, die gemäß dem Standard ISO/IEC 18000-63 (EPC Class-1 Gen-2) ausgebildet sind. Derartige EPC Tags sind mit einem EPC ("Electronic Product Code") versehen, bei dem es sich in der Regel um eine aus 96 Bits bestehende Bitfolge handelt und der dazu geeignet ist, ein entsprechendes EPC Tag eindeutig zu identifizieren.

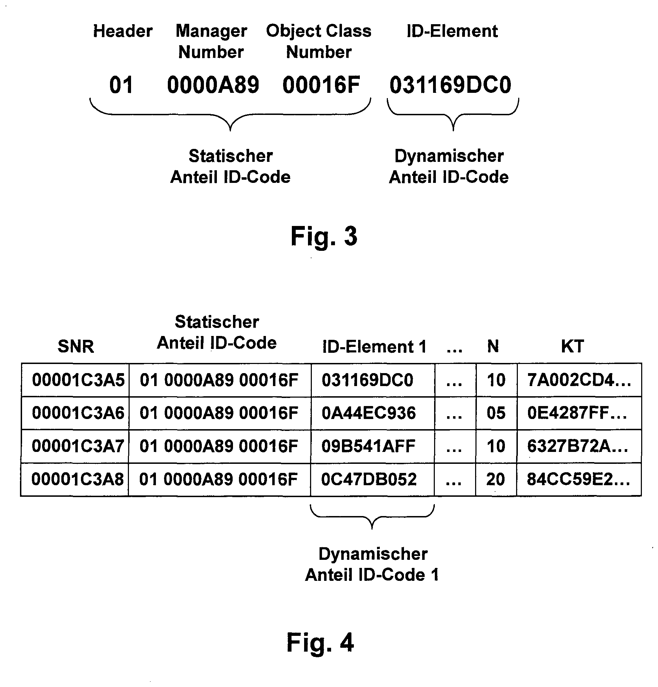

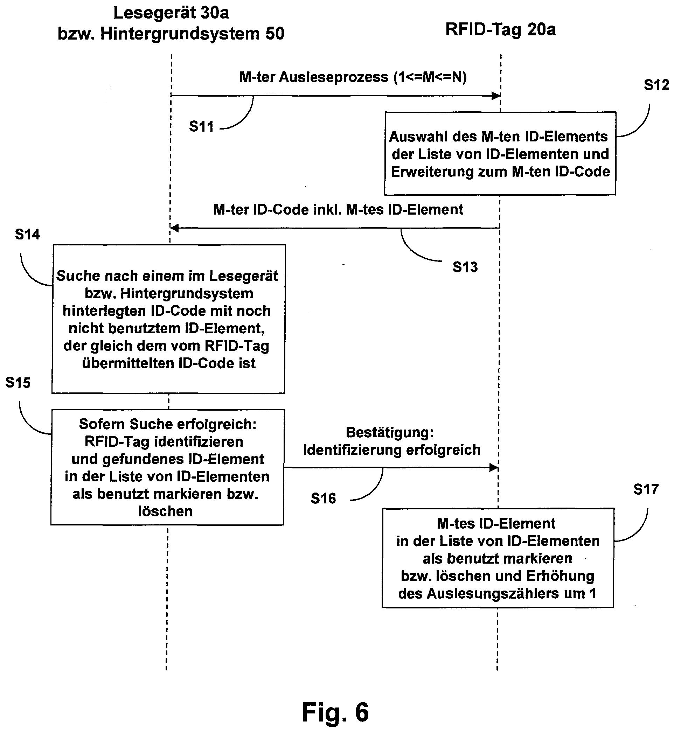

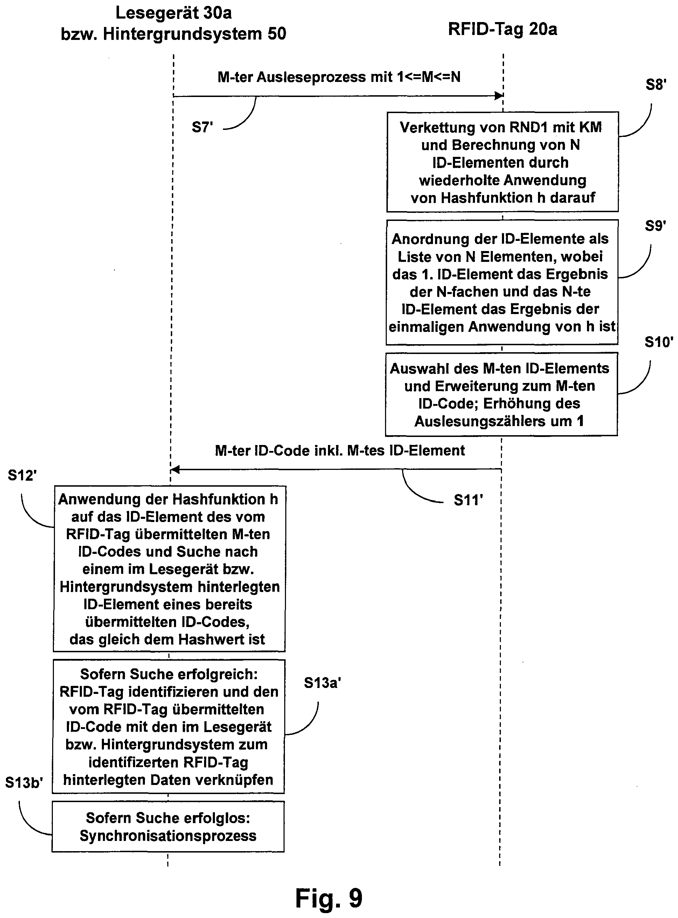

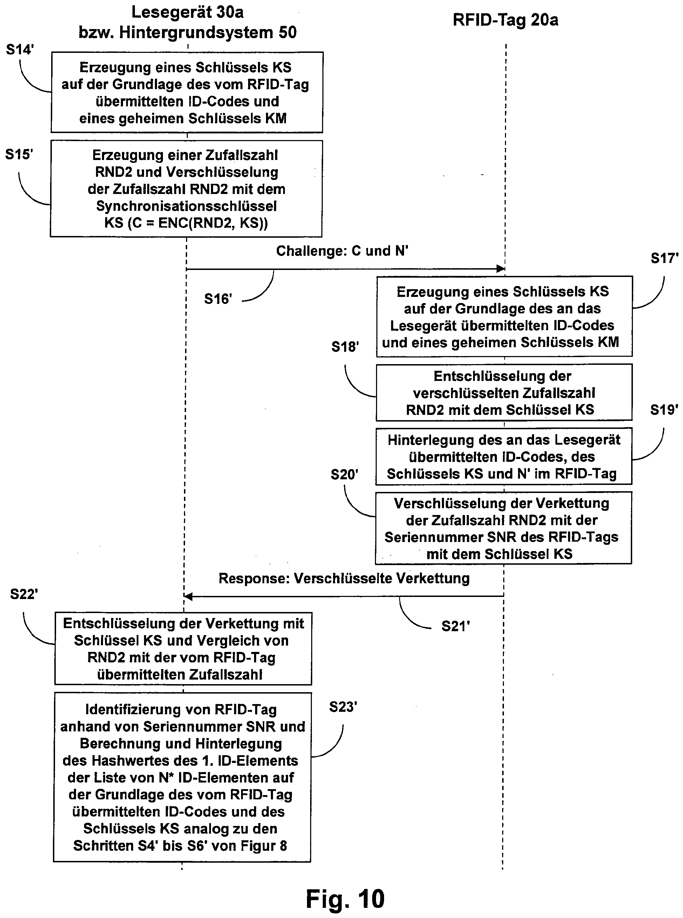

Figur 3 zeigt in Hexadezimaldarstellung das Format eines dynamischen Identifikationscodes zur eindeutigen Identifizierung eines RFID-Tags 20a, 20b gemäß einer bevorzugten Ausführungsform der Erfindung. Bei dem erfindungsgemäß bevorzugten dynamischen Identifikationscode handelt es sich um eine Abwandlung des EPC, bei dem es sich in der Regel um eine aus 96 Bits bestehende Bitfolge handelt. Dabei haben die ersten 60 Bits des dynamischen Identifikationscodes vorzugsweise dieselben Bedeutungen wie die ersten 60 Bits des EPC, nämlich die folgenden. Die ersten 8 Bits des dynamischen Identifikationscodes stellen den "Header" dar, der ein EPC-Kodierungsschema festlegt. Die nächsten 28 Bits des dynamischen Identifikationscodes werden als "Manager Number" bezeichnet, die Auskunft über den Hersteller bzw. Herausgeber des EPC Tags gibt. Die nächsten 24 Bits des dynamischen Identifikationscodes ("Object Class Number") definieren die Objektklasse, der das mit dem EPC Tag verbundene Objekt zugeordnet ist. Abweichend vom EPC, bei dem die verbleibenden 36 Bits eine statische Seriennummer definieren, bei der es sich um die fortlaufende Nummer eines bestimmten Produkts eines Herstellers handelt und mittels der sich zusammen mit den Informationen, die in der "Manager Number" und der "Object Class Number" enthalten sind, ein EPC Tag eindeutig identifiziert lässt, werden bei dem in Figur 3 dargestellten bevorzugten dynamische Identifikationscode die verbleibenden 36 Bits vorzugsweise durch ein nachstehend im Detail beschriebenes dynamisches Identifikationselement gebildet. Mit anderen Worten: Der in Figur 3 dargestellte dynamische Identifikationscode gemäß einer bevorzugten Ausführungsform der Erfindung umfasst einen statischen Anteil, der aus dem "Header", der "Manager Number" und der "Object Class Number" besteht, die auch beim herkömmlichen EPC vorhanden sind, und einen dynamischen Anteil, der durch ein dynamisches Identifikationselement gebildet wird. Wie dies nachstehend anhand der Figuren 6 und 9 im Detail beschrieben wird, kann gemäß einer bevorzugten Ausführungsform der Erfindung bei einem Auslesevorgang vom RFID-Tag 20a, 20b statt des herkömmlichen statischen EPC ein dynamischer Identifikationscode mit dem in Figur 3 dargestellten Format bereitgestellt werden, dessen dynamischer Anteil von einem (dynamischen) Identifikationselement gebildet wird. Die Seriennummer, die Teil des herkömmlichen EPC ist, kann sicher im RFID-Tag 20a, 20b hinterlegt sein, z.B. im gesicherten Bereich 28a des Speichers 28, und wird nur im Rahmen einer nachstehend im Zusammenhang mit der Figur 10 beschriebenen bevorzugten Ausführungsform eines Synchronisationsprozesses sicher an ein Lesegerät ausgegeben.

Die in Figur 3 dargestellte bevorzugte Ausgestaltung des dynamischen Identifikationscodes mit einem statischen Anteil, der den ersten 60 Bits des herkömmlichen EPC entspricht, und einem dynamischen Anteil in Form eines Identifikationselements weist unter anderem den Vorteil auf, dass anhand des statischen Anteils des dynamischen Identifikationscodes, der den ersten 60 Bits des herkömmlichen EPC entspricht, vom Lesegerät 30a, 30b (und/ oder dem mit diesem verbundenen Hintergrundsystem 50) eine Vorselektion durchgeführt werden kann, indem RFID-Tags, die nicht Teil des Systems 10 sind, aussortiert werden können, was eine unnötige Belastung des Hintergrundsystems 50 verhindert.

Obgleich, wie vorstehend beschrieben, ein dynamischer Identifikationscode vorzugsweise aus einem statischen Anteil, d.h. einem Anteil, der sich von Auslesevorgang zu Auslesevorgang nicht ändert, und einem dynamischen Anteil, d.h. einem Anteil, der sich von Auslesevorgang ändert, ist es erfindungsgemäß ebenfalls denkbar, dass ein dynamischer Identifikationscode vollständig aus einen dynamischen Anteil besteht, d.h. keinen statischen Anteil aufweist. Bei der nachstehenden Beschreibung eines Initialisierungs- bzw. Personalisierungsprozesses, eines Auslesevorgangs und eines Synchronisationsprozesses zwischen einem RFID-Tag und einem Lesegerät gemäß bevorzugter Ausführungsform der Erfindung, wird davon ausgegangen, dass ein dynamischer Identifikationscode die in Figur 3 dargestellten bevorzugte Struktur aufweist, d.h. aus einem statischen Anteil und einem dynamischen Anteil besteht, wobei der dynamische Anteil eines dynamischen Identifikationscodes durch ein dynamisches Identifikationselement ausgebildet wird, und folglich zwischen einem dynamischen Identifikationscode und einem (dynamischen) Identifikationselement unterschieden. Der Fachmann wird jedoch erkennen, dass die nachstehende Beschreibung auch auf ebenfalls von der vorliegenden Erfindung umfasste Ausführungsformen zutrifft, bei der ein dynamischer Identifikationscode nur einen dynamischen Anteil aufweist, d.h. der dynamischer Identifikationscode gleich dem dynamischen Identifikationselement ist.

Fig. 4 zeigt eine schematische beispielhafte Darstellung von Daten in Form einer Tabelle, die gemäß einer bevorzugten Ausführungsform der Erfindung für die RFID-Tags des Systems 10 im Hintergrundsystem 50, beispielsweise in einer Datenbank davon, hinterlegt sein können. Aufgrund der Verbindung des Hintergrundsystems 50 über das Kommunikationsnetzwerk 40 mit den Lesegeräten 30a, 30b können auch die Lesegeräte 30a, 30b des Systems auf diese im Hintergrundsystem 50 hinterlegten Daten zugreifen, die jeweils mit einem RFID-Tag verknüpft sind. Der Übersichtlichkeit halber zeigt Figur 4 lediglich eine Auswahl von Daten, die für vier beispielhafte RFID-Tags in dem Hintergrundsystem 50 hinterlegt sind. Selbstverständlich können für ein RFID-Tag im Hintergrundsystem 50 noch eine Vielzahl zusätzlicher Daten hinterlegt sein bzw. werden, wie dies in Figur 4 durch die mit Punkten gefüllte Spalte angedeutet ist. Ferner wird der Fachmann ohne weiteres erkennen, dass im Hintergrundsystem 50 die Daten für mehr oder weniger als die in Figur 4 dargestellten vier RFID-Tags hinterlegt werden können.

Die erste Spalte der in Figur 4 dargestellten Tabelle enthält (in hexadezimaler Darstellung und in fortlaufender Reihenfolge) jeweils die eindeutige Seriennummer eines RFID-Tags. Dabei handelt es sich um eine statische Seriennummer die für das Tag eine eindeutige Kennung darstellt und in einer bevorzugten Ausführungsform wie das ID-Element des herkömmlichen EPC aus 36 Bit besteht. Wie der Fachmann erkennt, ergibt sich der herkömmliche EPC bei der hier beschriebenen bevorzugten Ausführungsform aus der im Hintergrundsystem 50 hinterlegten Seriennummer eines RFID-Tags (Spalte 1 der in Figur 4 dargestellten Tabelle) und dem ebenfalls im Hintergrundsystem 50 vorhandenen statischen Anteil eines dynamischen Identifikationscodes (Spalte 2 der in Figur 4 dargestellten Tabelle), was eine eindeutige Identifizierung des entsprechenden RFID-Tags ermöglicht. Wie die Seriennummer eines RFID-Tags in Verbindung mit dem statischen Anteil eines dynamischen Identifikationscodes im Hintergrundsystem 50 hinterlegt wird und welche Bedeutung die weiteren in Figur 4 dargestellten Daten aufweisen, wird nachstehend im Zusammenhang mit bevorzugten Ausführungsformen eines Initialisierungs- bzw. Personalisierungsprozesses, eines Auslesevorgangs und eines Synchronisationsprozesses beschrieben. Beispielsweise können für ein jeweiliges RFID-Tag im Hintergrundsystem 50 ferner die Zahl N, die die Anzahl der Elemente eines Satzes von zwischen einem jeweiligen RFID-Tag und einem Lesegerät (bzw. dem Hintergrundsystem) vereinbarten dynamischen Identifikationscodes bestimmt, und/ oder ein für ein jeweiliges RFID-Tag individueller Schlüssel KT hinterlegt sein.

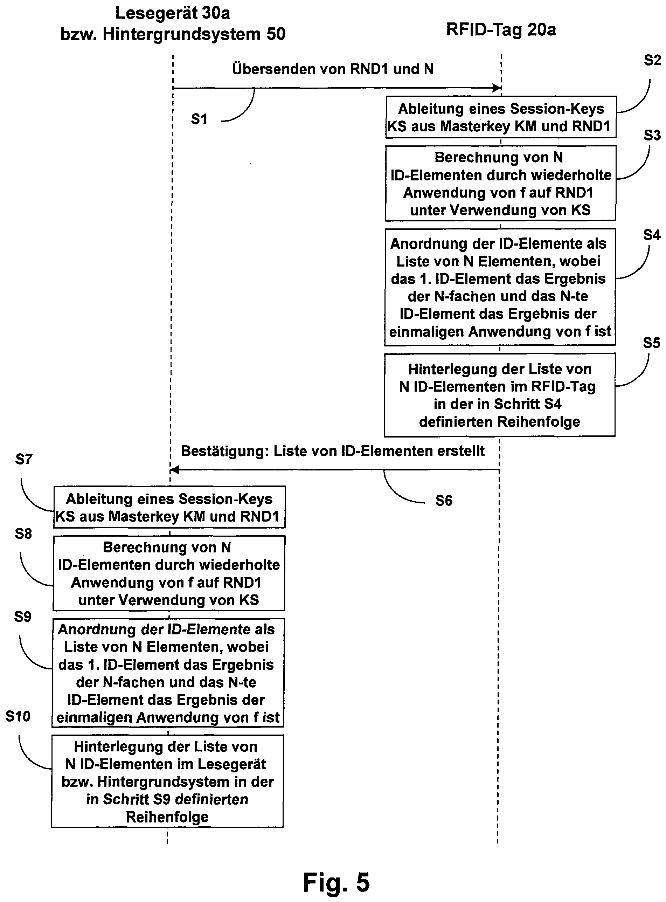

In Figur 5 ist ein Initialisierungs- bzw. Personalisierungsprozess gemäß einer bevorzugten Ausführungsform der Erfindung schematisch dargestellt. Der Initialisierungs- bzw. Personalisierungsprozess zwischen dem RFID-Tag 20a und dem Lesegerät 30a findet vorzugsweise in einer gesicherten Umgebung statt, beispielsweise beim Hersteller und/ oder Herausgeber des RFID-Tags 20a. Alternativ kann die in Figur 5 dargestellte bevorzugte Ausführungsform des Initialisierungs- bzw. Personalisierungsprozesses (oder auch nur Teile davon) auch zu einem späteren Zeitpunkt erfolgen, d.h. zu einem Zeitpunkt zu dem sich das RFID-Tag 20a bereits im Feld befindet, also beispielsweise unmittelbar vor dem ersten Auslesevorgang.

Zu Beginn des Initialisierungs- bzw. Personalisierungsprozesses gemäß der in Figur 5 dargestellten bevorzugten Ausführungsform einigen sich das RFID-Tag 20a und das Lesegerät 30a (und/ oder das mit diesem verbundene Hintergrundsystem 50) auf eine Zufallszahl RND1, die als Startwert zur Ableitung des Satzes von dynamischen Identifikationscodes dient, und eine Zahl N, die die Anzahl der Elemente des Satzes von dynamischen Identifikationscodes zur Identifizierung des RFID-Tags 20a festlegt. Hierzu können beispielsweise die Zufallszahl RND1 und die Zahl N mittels einer speziellen APDU gemäß der Norm ISO/IEC 7816-4 vom Lesegerät 30a an das RFID-Tag 20a übertragen werden (Schritt S1 in Figur 5). Für den bevorzugten Fall, dass es sich bei dem RFID-Tag 20a um ein Tag nach ISO/IEC 18000-63 bzw. EPC Class-1 Gen-2 handelt, wird die APDU dabei in ein "BlockWrite"-Kommando gemäß der Norm ISO/IEC 18000-63 eingebettet, wie dies in der US 2007/0194889 beschrieben wird, auf die hiermit Bezug genommen wird.

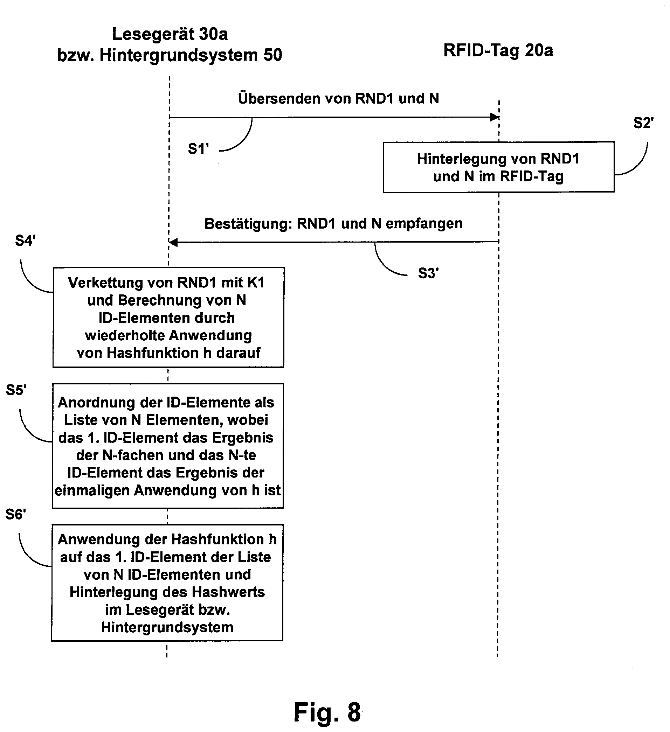

In Schritt S2 von Figur 5 wird mittels der Zufallszahl RND1 aus einem der im RFID-Tag 20a hinterlegten Schlüssel, z.B. dem Masterkey KM, mittels einer Schlüsselableitungsfunktion ein Session-Key KS abgeleitet. Bei dem in Figur 5 dargestellten Initialisierungs- bzw. Personalisierungsprozess gemäß einer bevorzugten Ausführungsform handelt es sich bei dem im RFID-Tag 20a hinterlegten Masterkey KM um einen Systemschlüssel, d.h. um einen auf allen RFID-Tags 20a, 20b und allen Lesegeräten 30a, 30b (bzw. dem Hintergrundsystem 50) des Systems 10 hinterlegten Schlüssel. Wie dies jedoch im Rahmen des in Figur 8 dargestellten Initialisierungs- bzw. Personalisierungsprozesses gemäß einer bevorzugten erfindungsgemäßen Variante beschrieben wird, kann für die Ableitung eines Session-Keys KS auch ein Tagindividueller Schlüssel KT verwendet werden, der jeweils auf einem RFID-Tag 20a, 20b und für jedes RFID-Tag 20a, 20b im Hintergrundsystem 50 hinterlegt ist (wie dies in der rechten Spalte von Figur 4 angedeutet ist). Gemäß einer weiteren Alternative kann statt eines aus KM oder KT abgeleiteten Session-Keys KS auch direkt der Schlüssel KM oder der Schlüssel KT zur Ableitung des Satzes von dynamischen Identifikationscodes verwendet werden. Eine mögliche Schlüsselableitungsfunktion ist die XOR-Verknüpfung der Zufallszahl RND1 mit einem im RFID-Tag 20a hinterlegten Schlüssel.

Anhand des in Schritt S2 von Figur 5 abgeleiteten Session-Keys KS und der Zahl N, die die Anzahl der Elemente des Satzes von dynamischen Identifikationscodes zur Identifizierung des RFID-Tags 20a festlegt, bestimmt das RFID-Tag 20a bzw. vorzugsweise dessen Prozessereinrichtung 26 einen Satz bzw. eine Folge von N Identifikationselementen auf die folgende bevorzugte Weise, die in Figur 5 als Schritt S3 zusammengefasst ist. Die Prozessoreinrichtung 26 des RFID-Tags 20a wendet vorzugsweise auf die Zufallszahl RND1 eine schlüsselabhängige Einwegfunktion f an, und zwar unter Verwendung des in Schritt S2 abgeleiteten Session-Keys KS, was den Funktionswert F1 der Zufallszahl RND1 unter Verwendung des Session-Keys KS liefert, F1 = f(KS, RND1). Auf diesen Funktionswert F1 wird wiederum die schlüsselabhängige Einwegfunktion f angewendet, woraus sich ein weiterer Funktionswert F2 mit F2 = f(KS, F1) = f(KS, f(KS, RND1)) ergibt. Diese rekursive Anwendung der schlüsselabhängigen Einwegfunktion f wird fortgesetzt bis zu einem N-ten Funktionswert FN, der sich aus der N-fachen Anwendung der schlüsselabhängigen Einwegfunktion f auf den Startwert in Form der Zufallszahl RND1 unter jeweiliger Verwendung des Session-Keys KS ergibt, d.h. Fi = f(KS, Fi-1) für 2 ≤ i ≤ N. Vorzugsweise wird aus der so berechneten Folge von N Funktionswerten F1, F2, ..., FN das letzte Element der Folge, d.h. der Funktionswert FN, als das erste Identifikationselement des Folge von N Identifikationselementen bestimmt und das erste Element der Folge, d.h. der Funktionswert F1, als das N-te Identifikationselement der Liste von N Identifikationselementen bestimmt. Die in der Folge F1, F2, ..., FN zwischen den Funktionswerten F1 und FN liegenden Funktionswerte Fi mit 2 ≤ i ≤ N-1 werden entsprechend als die weiteren Identifikationselemente der Liste von N Identifikationselementen bestimmt. So wird z.B. das zweite Element der Folge, d.h. der Funktionswert F2 als das (N-1)-te Identifikationselement der Liste von N Identifikationselementen bestimmt. Mit anderen Worten: Eine Liste von N Identifikationselementen mit definierter Reihenfolge wird bestimmt, indem die Reihenfolge der Liste von N Funktionswerten F1, F2, ..., FN umgekehrt wird, was in Figur 5 als Schritt S4 zusammengefasst ist.

Der Fachmann wird erkennen, dass anstatt der Zufallszahl RND1, die bei der in Figur 5 dargestellten Ausführungsform ebenfalls zur Ableitung des Session-Keys KS verwendet wird, auch ein anderer Startwert, z.B. eine weitere zwischen dem Lesegerät 30a und dem RFID-Tag 20 ausgetauschte Zufallszahl, für die Berechnung der N Funktionswerte der schlüsselabhängigen Einwegfunktion f verwendet werden kann. Vorzugsweise handelt es sich bei der schlüsselabhängigen Einwegfunktion f um einen Message Authentication Code, wie beispielsweise HMAC, CMAC, CBC-MAC oder dergleichen.

Sobald die vorstehend beschriebenen Schritte zur Ableitung des Satzes bzw. der Liste von N Identifikationselementen mit einer definierten Reihenfolge durchgeführt worden sind, kann ein jeweiliges Identifikationselement durch Verkettung mit dem entsprechenden statischen Anteil eines Identifikationscodes zu einem dynamischen Identifikationscode erweitert werden und in Schritt S5 von Figur 5 der sich so aus dem Satz von N Identifikationselementen ergebende Satz von N dynamischen Identifikationscodes im gesicherten Bereich 28b des Speichers 28 des RFID-Tags 20s hinterlegt werden. Alternativ kann in Schritt S5 von Figur 5 im Speicher 28 des RFID-Tags 20a lediglich der Satz von N Identifikationselementen in der in Schritt S4 von Figur 5 definierten Reihenfolge hinterlegt werden, wie dies in Figur 4 angedeutet ist, die dann bei einem jeweiligen Auslesevorgang durch Verkettung mit dem entsprechenden statischen Anteil eines dynamischen Identifikationscodes zu einem jeweiligen dynamischen Identifikationscode erweitert werden. Optional kann dem Lesegerät 30a bestätigt werden, dass der Satz von N Identifikationselementen oder alternativ dynamischen Identifikationscodes erfolgreich erstellt und hinterlegt worden ist (Schritt S6 von Figur 5).

Nachdem das RFID-Tag 20a dem Lesegerät 30a bestätigt hat, dass der Satz von N Identifikationselementen oder alternativ dynamischen Identifikationscodes abgeleitet und im Speicher 28 des RFID-Tags 20a hinterlegt worden ist, führt das Lesegerät 30a (und/ oder das mit diesem verbundene Hintergrundsystem 50) dieselben Schritte wie das RFID-Tag 20a zur Ableitung eines Satzes von N dynamischen Identifikationscodes oder alternativ Identifikationselementen durch. Mit anderen Worten: Wie das RFID-Tag 20a in den Schritten S1, S2 und S3 bestimmt das Lesegerät 30a (und/ oder das mit diesem verbundene Hintergrundsystem 50) zunächst einen Session-Key KS auf der Grundlage des Masterkeys KM und der Zufallszahl RND1 (Schritt S7 von Figur 5), berechnet sodann N Identifikationselemente durch die rekursive Anwendung der schlüsselabhängigen Einwegfunktion f auf den Startwert in Form der Zufallszahl RND1 unter Verwendung des Session-Key KS (Schritt S8 von Figur 5) und ordnet den so berechneten Satz von N Identifikationselementen in einer Liste an, wobei das 1. Identifikationselement der Liste das Ergebnis der N-fachen, das 2. Identifikationselement der Liste das Ergebnis der (N-1)-fachen, usw. und das N-te Identifikationselement der Liste das Ergebnis der einmaligen Anwendung der schlüsselabhängigen Einwegfunktion f auf die Zufallszahl RND1 unter Verwendung des Session-Keys KS ist (Schritt S9 von Figur 5). Bei der in Figur 5 dargestellten bevorzugten Ausführungsform des Initialisierungs- bzw. Personalisierungsprozesses wird der so erstellte Satz von N Identifikationselementen in der in Schritt S9 von Figur 5 definierten Reihenfolge in dem Lesegerät 30a (und/ oder dem mit diesem verbundenen Hintergrundsystem 50) hinterlegt (Schritt S10 von Figur 5). Alternativ kann wiederum ein jeweiliges Identifikationselement durch Verkettung mit dem entsprechenden statischen Anteil eines dynamischen Identifikationscodes zu einem dynamischen Identifikationscode erweitert werden und der so erstellte Satz von N dynamischen Identifikationscodes in dem Lesegerät 30a (und/ oder dem mit diesem verbundenen Hintergrundsystem 50) hinterlegt werden. Damit ist die Initialisierung bzw. Personalisierung gemäß der in Figur 5 dargestellten bevorzugten Ausführungsform abgeschlossen und das RFID-Tag 20a ist dazu bereit, durch eines der Lesegeräte 30a, 30b des Systems 10 ausgelesen zu werden.

Der Fachmann wird erkennen, dass beispielsweise die in Schritt S6 von Figur 5 durchgeführte Bestätigung des RFID-Tags 20 an das Lesegerät 30a optional ist, d.h. in einigen erfindungsgemäßen Ausführungsformen auch entfallen kann. Ferner müssen einige der Schritte von Figur 5 nicht unbedingt in der dargestellten zeitlichen Reihenfolge durchgeführt werden. So ist es beispielsweise vorstellbar, dass die von dem Lesegerät 30a (und/ oder dem mit diesem verbundenen Hintergrundsystem 50) durchgeführten Schritte S7 bis S10 im Wesentlichen zeitgleich mit oder vor den vom RFID-Tag 20a durchgeführten Schritten S2 bis S5 erfolgen.

In Figur 6 wird anhand einer schematischen Darstellung der M-te Auslesevorgang (mit 1 ≤ M ≤ N) des RFID-Tags 20a beispielsweise durch das Lesegerät 30a des Systems 10 von Figur 1 gemäß einer bevorzugten Ausführungsform der Erfindung veranschaulicht. Ein solcher Auslesevorgang kann insbesondere nach dem in Figur 5 dargestellten und vorstehend beschriebenen Initialisierungs- bzw. Personalisierungsprozess gemäß einer bevorzugten Ausführungsform zwischen dem RFID-Tag 20a und dem Lesegerät 30a durchgeführt werden. Wie der Fachmann erkennt, kann selbstverständlich das RFID-Tag 20a vor dem Auslesen auch mittels des Lesegeräts 30b initialisiert bzw. personalisiert worden sein, da sowohl das Lesegerät 30a als auch das Lesegerät 30b über das Kommunikationsnetzwerk 40 auf das Hintergrundsystem 50 und die dort hinterlegten Daten zugreifen können.

In Schritt S11 von Figur 6 wird der M-te Auslesevorgang des RFID-Tags 20a angestoßen, indem vorzugsweise das Lesegerät 30a die Kommunikation mit dem RFID-Tag 20a aufnimmt, wenn das RFID-Tag 20a in den Kommunikationsbereich des Lesegeräts 30a eintritt. Daraufhin wählt das RFID-Tag 20a das M-te Identifikationselement aus, bei dem es sich um das nächste noch nicht bei einem vorhergehenden Auslesevorgang verwendete Identifikationselement des im Speicher 28 des RFID-Tags 20a hinterlegten Satzes von N Identifikationselementen handelt. Damit das RFID-Tag 20a dazu in der Lage ist, das M-te Identifikationselement zu identifizieren, können vom RFID-Tag 20a in vorhergehenden Auslesevorgängen bereits verwendete Identifikationselemente als solche markiert worden sein oder aus dem im Speicher 28 des RFID-Tags 20a hinterlegten Satzes von N Identifikationselementen gelöscht worden sein. Alternativ kann ein Auslesungszähler im RFID-Tag 20a implementiert sein, dessen Wert die Anzahl der erfolgten Auslesevorgänge angibt und sich nach jedem Auslesevorgang um eins erhöht. Das vom RFID-Tag 20a ausgewählte M-te Identifikationselement wird mittels des statischen Anteils eines entsprechenden dynamischen Identifikationscodes, der vorzugsweise ebenfalls im RFID-Tag 20a hinterlegt ist, zu einem M-ten dynamischen Identifikationscode erweitert (Schritt S12 von Figur 6). Selbstverständlich entfällt dieser Schritt bei der vorstehend beschriebenen alternativen Ausführungsform, bei der im Rahmen des Initialisierungs- bzw. Personalisierungsprozesses im RFID-Tag 20a nicht die Identifikationselemente, sondern die entsprechenden dynamischen Identifikationscodes im RFID-Tag 20a hinterlegt worden sind.

Nachdem in Schritt S13 von Figur 6 das RFID-Tag 20a das in Schritt S12 ausgewählte und zu einem M-ten dynamischen Identifikationscode erweiterte M-te Identifikationselement an das Lesegerät 30a übertragen hat, versucht das Lesegerät 30a (und/ oder das mit diesem verbundene Hintergrundsystem 50), den vom RFID-Tag 20a übermittelten dynamischen Identifikationscode bzw. dessen Identifikationselement in der Datenbank des Hintergrundsystems 50 wieder zu finden (Schritt S14 von Figur 6). Um die Möglichkeit eines Replay-Angriffs und somit des Klonens eines RFID-Tags zu vermeiden, sollte dabei sichergestellt werden, dass nur nach Identifikationselementen gesucht wird, die nicht in einem früheren Auslesevorgang als Teil eines dynamischen Identifikationscodes von einem RFID-Tag 20a, 20b an ein Lesegerät 30a, 30b bzw. das Hintergrundsystem 50 übertragen worden sind, d.h. noch nicht im Rahmen eines Auslesevorgangs verwendet worden sind. Hierzu kann das Lesegerät 30a (und/ oder das mit diesem verbundene Hintergrundsystem 50) dazu ausgestaltet sein, bei einem vorhergehenden Auslesevorgang bereits verwendete Identifikationselemente in der Datenbank des Hintergrundsystem 50 entsprechend zu kennzeichnen. Alternativ können diese bei einem vorhergehenden Auslesevorgang bereits verwendeten Identifikationselemente in der Datenbank des Hintergrundsystems 50 gelöscht werden.

Sofern von dem Lesegerät 30a (und/ oder dem mit diesem verbundenen Hintergrundsystem 50) ein solches bisher nicht benutztes Identifikationselement als Teil eines dynamischen Identifikationscodes gefunden wird, der gleich dem vom RFID-Tag 20a in Schritt S13 übermittelten dynamischen Identifikationscode ist, kann das Lesegerät 30a (und/ oder das mit diesem verbundene Hintergrundsystem 50) anhand des aufgefundenen Identifikationselements und der mit diesem verknüpften Daten das RFID-Tag 20a eindeutig identifizieren (Schritt S15 von Figur 6). Dies ist deshalb möglich, weil jede der im Hintergrundsystem 50 hinterlegten Listen von Identifikationselementen (bzw. Identifikationscodes) eindeutig einem RFID-Tag zugeordnet werden kann (siehe auch Figur 4).

Im Fall einer erfolgreichen Identifizierung des RFID-Tags 20a kann das Lesegerät 30a eine entsprechende Bestätigung an das RFID-Tag 20a senden (Schritt S16 von Figur 6). Daraufhin kann das RFID-Tag 20a das Identifikationselement des im Schritt S13 von Figur 6 an das Lesegerät 30a übermittelten Identifikationscodes in der im Speicher 28 des RFID-Tags 20a hinterlegten Liste von Identifikationselementen entsprechend markieren oder löschen (Schritt S17 von Figur 6) und den Wert eines ggf. im RFID-Tag 20a implementierten Auslesungszählers um eins erhöhen.

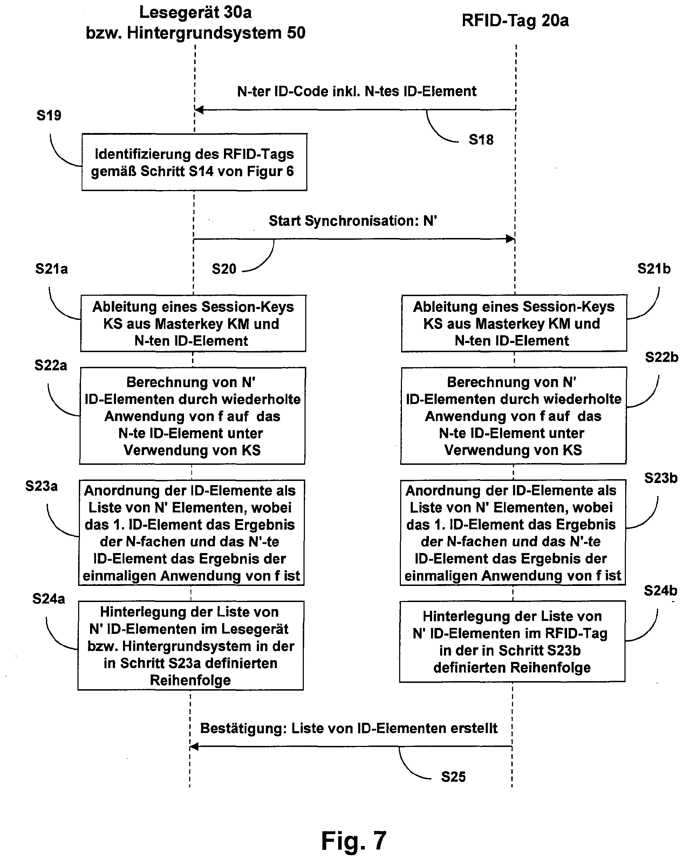

Für den Fall, dass es sich bei dem in Figur 6 dargestellten Auslesevorgang um den N-ten Auslesevorgang handelt, d.h. das RFID-Tag 20a in Schritt S13 von Figur 6 den N-ten dynamischen Identifikationscode des Satzes von N dynamischen Identifikationscodes an das Lesegerät 30a sendet, wird vorzugsweise der in Figur 7 dargestellte Synchronisationsprozess zwischen dem RFID-Tag 20a und dem Lesegerät 30a durchgeführt, der in großen Teilen ähnlich zu dem in Figur 5 dargestellten Initialisierungs- bzw. Personalisierungsprozess ist.

Nachdem in Schritt S18 von Figur 7 das RFID-Tag 20a seinen N-ten, d.h. seinen letzten Identifikationscode an das Lesegerät 30a gesendet hat und das Lesegerät 30a in Schritt S19 das RFID-Tag 20a anhand des N-ten Identifikationscodes identifiziert hat, stößt das Lesegerät 30a in Schritt S20 von Figur 7 einen Synchronisationsprozess an, mittels dem das Lesegerät 30a und das RFID-Tag 20a einen neuen Satz von N' dynamischen Identifikationscodes vereinbaren. Hierzu kann in Schritt S20 von Figur 7 das Lesegerät 30a die Zahl N' an das RFID-Tag 20a übertragen, die die Anzahl der neu zu bestimmenden dynamischen Identifikationscodes definiert. Alternativ kann auch die bereits im Rahmen des in Figur 5 dargestellten Initialisierungs- bzw. Personalisierungsprozesses verwendete Zahl N verwendet werden, so dass in diesem Fall N' gleich N ist.

Im Gegensatz zu dem in Figur 5 dargestellten Initialisierungs- bzw. Personalisierungsprozess wird bei dem in Figur 7 dargestellten Synchronisationsprozess zur Ableitung eines Session-Keys und zur Ableitung eines neuen Satzes von N' dynamischen Identifikationscodes vorzugsweise keine Zufallszahl ausgetauscht (obgleich dies ebenfalls denkbar ist), sondern zur Ableitung eines Session-Keys und zur Ableitung eines neuen Satzes von N' dynamischen Identifikationscodes wird das Identifikationselement des vom RFID-Tag 20a übermittelten N-ten dynamischen Identifikationscodes (nachstehend auch N-tes Identifikationselement genannt) verwendet. Dementsprechend wird sowohl vom Lesegerät 30a (bzw. von dem mit diesem verbundenen Hintergrundsystem 50) als auch vom RFID-Tag 20a mittels einer Schlüsselableitungsfunktion auf der Grundlage des N-ten Identifikationselements und des Masterkeys KM ein Session-Key KS abgeleitet (Schritte S21a und S21b von Figur 7). Anschließend wird sowohl vom Lesegerät 30a (bzw. von dem mit diesem verbundenen Hintergrundsystem 50) als auch vom RFID-Tag 20a ein neuer Satz von N' Identifikationselementen bzw. dynamischen Identifikationscodes abgeleitet und hinterlegt (Schritte S22a bis S24a bzw. S22b bis S24b von Figur 7). Der einzige Unterschied zwischen den Schritten S22a bis S24a, die auf Seiten des Lesegeräts 30a (und/ oder dem mit diesem verbundenen Hintergrundsystem 50) durchgeführt werden, bzw. den Schritten S22b bis S24b von Figur 7, die auf Seiten des RFID-Tags 20a durchgeführt werden, und den Schritten S8 bis S10 bzw. den Schritten S3 bis S5 von Figur 5 besteht darin, dass in Schritt S22a bzw. Schritt S22b von Figur 7 die schlüsselabhängige Einwegfunktion f unter Verwendung des Session-Keys KS rekursiv auf das vom RFID-Tag 20a als Teil des dynamischen Identifikationscodes übermittelte N-te Identifikationselement angewendet wird, was wiederum eine Folge von Funktionswerten F1 bis FN' liefert, mit F1 = f(KS, N-tes ID-Element), F2 = f(KS, F1) = f(KS, f(KS, N-tes ID-Element)) und so weiter. Zum Abschluss des in Figur 7 dargestellten Synchronisationsprozesses kann das RFID-Tag 20a in Schritt S25 von Figur 7 dem Lesegerät 30a bestätigen, dass ein neuer Satz von N' Identifikationselementen oder alternativ dynamischen Identifikationscodes erfolgreich erstellt und hinterlegt worden ist (Schritt S6 von Figur 5) und das RFID-Tag 20a für neue Auslesevorgänge bereit ist.

Die Figuren 8 bis 10 zeigen einen Initialisierungs- bzw. Personalisierungsprozess, einen Auslesevorgang sowie einen Synchronisationsprozess gemäß alternativer Ausführungsformen der Erfindung. Die nachstehend beschriebenen Varianten unterscheiden sich von den vorstehenden im Zusammenhang mit den Figuren 5 bis 7 beschriebenen bevorzugten Ausführungsformen im Wesentlichen darin, dass zur Ableitung der dynamischen Identifikationscodes nicht eine schlüsselabhängige Einwegfunktion, sondern eine Einwegfunktion, vorzugsweise in Form einer Hashfunktion, verwendet wird und/oder ein jeweiliges Identifikationselement bzw. ein entsprechender dynamischer Identifikationscode bei jedem Auslesevorgang "on the fly" vom RFID-Tag 20a berechnet wird. Der Fachmann wird jedoch erkennen, dass sich diese nachstehend beschriebenen erfindungsgemäßen Varianten mit den vorstehenden im Zusammenhang mit den Figuren 5 bis 7 beschriebenen bevorzugten Ausführungsformen prinzipiell beliebig kombinieren lassen und auf diese Weise weitere erfindungsgemäße Ausführungsformen gebildet werden, die Teil der vorliegenden Offenbarung sind.

Figur 8 zeigt eine erfindungsgemäße Variante des in Figur 5 dargestellten Initialisierungs- bzw. Personalisierungsprozesses. Im Gegensatz zu den Schritten S2 bis S4 von Figur 5, bei denen der vollständige Satz von Identifikationselementen bzw. entsprechenden dynamischen Identifikationscodes zur Identifizierung des RFID-Tags 20a auf der Grundlage der vom Lesegerät 30a übermittelten Daten, nämlich der Zufallszahl RND1 und der Zahl N abgeleitet und im Speicher 28 des RFID-Tags 20a hinterlegt wird, werden in Schritt S2' von Figur 8 lediglich die vom Lesegerät 30a im Schritt S1¹ übermittelten Daten, d.h. RND1 und N, im Speicher 28 des RFID-Tags 20 hinterlegt. Beim optionalen Schritt S3' kann das RFID-Tag 20a dem Lesegerät 30a bestätigen, dass die Zufallszahl RND1 und N vom RFID-Tag 20a empfangen und in dessen Speicher 28 hinterlegt worden sind.

Auf Seiten des Lesegeräts 30a (und/ oder des mit diesem verbundenen Hintergrundsystems 50) werden auf der Grundlage der in Schritt S1' von Figur 8 an das RFID-Tag 20a übermittelten Daten, nämlich der Zufallszahl RND1 und der Zahl N, die Schritte S4' bis S6' durchgeführt. Zunächst wird in Schritt S4' von Figur 8 die Zufallszahl RND1 mit einem im Zusammenhang mit dem RFID-Tag 20a im Lesegerät 30a und/oder in dem mit diesem verbundenen Hintergrundsystem 50 hinterlegten geheimen Schlüssel, z.B. dem Systemschlüssel KM oder dem Tag-individuellen Schlüssel KT, verkettet bzw. konkateniert, wobei das Ergebnis dieser Verkettung als Startwert zur Berechnung der Identifikationselemente bzw. der dynamischen Identifikationscodes verwendet wird. Auf diese Verkettung der Zufallszahl RND1 z.B. mit dem geheimen Schlüssel KM wird eine Einwegfunktion in Form einer Hashfunktion h angewendet, was den Hashwert H1 der Verkettung der Zufallszahl RND1 mit dem geheimen Schlüssel KM liefert, H1 = h(RND1 | KM), wobei das Symbol | für die Operation der Verkettung bzw. Konkatenation steht. Auf diesen Hashwert H1 wird wiederum die Hashfunktion h angewendet, woraus sich ein weiterer Hashwert H2 mit H2 = h(H1) = h(h(RND1 | KM) ergibt. Dies wird fortgesetzt bis zu einem N-ten Hashwert HN, der sich aus der N-fachen Anwendung der Hashfunktion h auf die Verkettung der Zufallszahl RND1 mit dem geheimen Schlüssel KM ergibt, d.h. Hi = h(Hi-1) für 2 ≤ i ≤ N. Aus der so berechneten Folge von N Hashwerten H1, H2, ..., HN wird das letzte Element der Folge, d.h. der Hashwert HN, als das erste Identifikationselement der Liste von N Identifikationselementen bestimmt und das erste Element der Folge, d.h. der Hashwert H1, als das N-te Identifikationselement der Liste von N Identifikationselementen bestimmt. Die in der Folge H1, H2, ..., HN zwischen den Hashwerten H1 und HN liegenden Hashwerte Hi mit 2 ≤ i ≤ N-1 werden entsprechend als die weiteren Identifikationselemente der Liste von N Identifikationselementen bestimmt. So wird z.B. das zweite Element der Folge, d.h. der Hashwert H2 als das (N-1)-te Identifikationselement der Liste von N Identifikationselementen bestimmt. Mit anderen Worten: Eine Liste von N Identifikationselementen mit definierter Reihenfolge wird bestimmt, indem die Reihenfolge der Liste von N Hashwerten H1, H2, ..., HN umgekehrt wird, was in Figur 8 als Schritt S5' zusammengefasst ist.

Anstatt einer Hinterlegung der gesamten Liste von N Identifikationselementen (oder alternativ entsprechenden dynamischen Identifikationscodes), wie dies in Schritt S10 von Figur 5 erfolgt, wird in Schritt S6' von Figur 8 in dem Lesegerät 30a (und/ oder dem mit diesem verbundenen Hintergrundsystem 50) lediglich der Hashwert hinterlegt, der sich aus einer nochmaligen Anwendung der Haschfunktion auf das erste Identifikationselement (oder alternativ den ersten dynamischen Identifikationscode) ergibt. Mit anderen Worten: In dem Lesegerät 30a (und/ oder dem mit diesem verbundenen Hintergrundsystem 50) wird lediglich das Identifikationselement hinterlegt, das sich durch die (N+1)-fache Anwendung der Hashfunktion h auf die Verkettung der Zufallszahl RND1 mit dem geheimen Schlüssel KM ergibt. Alternativ kann in dem Lesegerät 30a (und/ oder dem mit diesem verbundenen Hintergrundsystem 50) lediglich der Hashwert hinterlegt werden, der sich durch die Anwendung der Hashfunktion auf den ersten dynamischen Identifikationscode ergibt, der sich aus der Verkettung des ersten Identifikationselements mit dem statischen Anteil des dynamischen Identifikationscodes ergibt. Die Identifikationselemente (oder alternativ die dynamischen Identifikationscodes) der in Schritt S5' erstellten Liste müssen somit nicht im Lesegerät 30a (und/ oder dem mit diesem verbundenen Hintergrundsystem 50) hinterlegt werden, sondern können verworfen werden, um beispielsweise Speicherplatz zu sparen.

Obgleich vorstehend als ein Schritt zur Bestimmung des Satzes von Identifikationselementen (oder alternativ von dynamischen Identifikationscodes) eine Verkettung bzw. Konkatenation der Zufallszahl RND1 mit dem geheimen Schlüssel KM beschrieben worden ist (Schritt S4' von Figur 8), wird der Fachmann erkennen, dass die Zufallszahl RND1 und der sicher sowohl im Speicher 28 des RFID-Tags 20a als auch in dem Lesegerät 30a (und/ oder dem mit diesem verbundenen Hintergrundsystem 50) hinterlegte geheime Schlüssel KM (oder der Schlüssel KT) im Rahmen der vorliegenden Erfindung auch anders miteinander verknüpft werden können, z.B. mittels einer XOR-Verknüpfung.

Figur 9 zeigt eine erfindungsgemäße Variante des in Figur 6 dargestellten M-ten Auslesevorgangs des RFID-Tags 20a, das zusammen mit dem Lesegerät 30a vorzugsweise mittels der in Figur 8 dargestellten erfindungsgemäßen Variante des Initialisierungs- bzw. Personalisierungsprozesses initialisiert bzw. personalisiert worden ist. Im Gegensatz zu dem in Figur 6 dargestellten Auslesevorgang gemäß einer ersten bevorzugten erfindungsgemäßen Variante, bei dem das RFID-Tag 20a das M-te Identifikationselement (oder alternativ den M-ten dynamischen Identifikationscode) aus der im Speicher 28 des RFID-Tags 20 hinterlegten Liste von Identifikationselementen bzw. dynamischen Identifikationscodes lediglich auswählt (Schritt S12 von Figur 6), wird in den Schritten S8', S9' und S10' des in Figur 9 dargestellten alternativen Auslesevorgangs das M-te Identifikationselement (oder alternativ der M-te dynamische Identifikationscode) auf der Grundlage der im Speicher 28 des RFID-Tags 20a hinterlegten Daten, nämlich der Zufallszahl RND1, der Zahl N sowie dem geheimen Schlüssel KM, "on the fly" berechnet. Hierzu wird vom RFID-Tag 20a zunächst vorzugsweise mittels eines Auslesungszählers überprüft, wie oft das RIFD-Tag 20a seit der Initialisierung bzw. Personalisierung bereits ausgelesen worden ist. Dieser Auslesungszähler kann beispielsweise im Speicher 28 des RFID-Tags 20 derart hinterlegt sein, dass nach jedem Auslesevorgang der Wert des Auslesungszählers um eins erhöht wird.

Sobald das RFID-Tag 20a vorzugsweise mittels des Auslesungszählers festgestellt hat, dass es sich um den M-ten Auslesevorgang (mit 1 ≤ M ≤ N) handelt, wird das M-te Identifikationselement bestimmt, indem N Identifikationselemente durch die wiederholte Anwendung der Hashfunktion h auf die Verkettung der Zufallszahl RND1 mit dem geheimen Schlüssel KM berechnet werden (Schritt S8' von Figur 9) und die so berechneten Identifikationselemente als Liste von N Identifikationselementen derart angeordnet werden, dass das 1. Identifikationselement der Liste das Ergebnis der N-fachen, das 2. Identifikationselement der Liste das Ergebnis der (N-1)-fachen, usw. und das N-te Identifikationselement der Liste das Ergebnis der einmaligen Anwendung der Hashfunktion h auf die Verkettung der Zufallszahl RND1 mit dem geheimen Schlüssel KM ist (Schritt S9' von Figur 9). In Schritt S10' von Figur 9 wird das M-te Identifikationselement der Liste von N-Identifikations-elementen bestimmt, mittels eines statischen Anteils eines dynamischen Identifikationscodes zu einem entsprechenden dynamischen Identifikationscode erweitert und in Schritt S11' von Figur 9 an das Lesegerät 30a übermittelt.

Wie der Fachmann erkennt, ist es möglich, die Schritte S8' bis S10' von Figur 9 dadurch zu vereinfachen bzw. zusammen zu fassen, dass das M-te Identifikationselement berechnet wird, indem die Hashfunktion ((N+1)-M)-fach auf die Verkettung der Zufallszahl RND1 mit dem geheimen Schlüssel KM angewendet wird, so dass in diesem Fall nicht alle N Identifikationselemente berechnet werden müssen.

Nachdem das Lesegerät 30a den M-ten dynamischen Identifikationscode einschließlich des M-ten Identifikationselements vom RFID-Tag 20a erhalten hat (Schritt S11' in Figur 9), findet wiederum ein Vergleich des Identifikationselements des vom RFID-Tag 20a übersendeten M-ten dynamischen Identifikationscodes mit den in dem Lesegerät 30a (und/oder dem mit diesem verbundenen Hintergrundsystem 50) hinterlegten Identifikationselementen vorzugsweise auf die folgende Weise statt. Das Lesegerät 30a berechnet mittels der Hashfunktion h den Hashwert des Identifikationselements des vom RFID-Tag 20a in Schritt S11' von Figur 9 übermittelten M-ten dynamischen Identifikationscodes. Anschließend wird nach einem in dem Lesegerät 30a (und/ oder dem mit diesem verbundenen Hintergrundsystem 50) hinterlegten Identifikationselement gesucht, das gleich dem Hashwert des Identifikationselements des vom RFID-Tag 20a übermittelten M-ten dynamischen Identifikationscodes ist. Wie vorstehend beschrieben, ist bei der in Figur 8 dargestellten erfindungsgemäßen Variante des Initialisierungs- bzw. Personalisierungsprozesses zwischen dem RFID-Tag 20a und dem Lesegerät 30a (und/ oder dem mit diesem verbundenen Hintergrundsystem 50) in Schritt S6' der Hashwert des 1. Identifikationselements des Satzes von N Identifikationselementen, die in den Schritten S4' und S5' von Figur 8 bestimmt worden sind, in dem Lesegerät 30a (und/ oder dem mit diesem verbundenen Hintergrundsystem 50) hinterlegt worden.

Für den Fall, dass es sich bei dem Auslesevorgang um den ersten Auslesevorgang des RFID-Tags 20a handelt (M=1), wird vom RFID-Tag 20a in Schritt S11' von Figur 9 das erste Identifikationselement als Teil des ersten dynamischen Identifikationscodes an das Lesegerät 30a übertragen und in Schritt S12' von dem Lesegerät 30a (und/ oder dem mit diesem verbundenen Hintergrundsystem 50) der Hashwert davon berechnet. Da der Hashwert des ersten Identifikationselements in Schritt S6' von Figur 8 in dem Lesegerät 30a (und/ oder dem mit diesem verbundenen Hintergrundsystem 50) hinterlegt worden ist, kann das Lesegerät 30a (und/oder das mit diesem verbundene Hintergrundsystem 50) das RFID-Tag 20a anhand des Hashwerts des ersten Identifikationselements identifizieren (Schritt S13a' von Figur 9), das in Schritt S11' von Figur 9 als Teil des ersten dynamischen Identifikationscode übersendet worden ist. Nach der erfolgreichen Identifizierung des RFID-Tags 20a anhand des Hashwerts des Identifikationselements des beim ersten Auslesevorgangs übersendeten Identifikationscodes wird in Schritt S13a' von Figur 9 ferner der vom RFID-Tag 20a gesendete Identifikationscode einschließlich des Identifikationselements in dem Lesegerät 30a (und/ oder dem mit diesem verbundenen Hintergrundsystem 50) hinterlegt. Dies kann vorzugsweise dadurch geschehen, dass der in Schritt S6' von Figur 8 hinterlegte Hashwert des ersten Identifikationselements durch das erste Identifikationselement überschrieben wird, das Teil des vom RFID-Tag 20a in Schritt S11' von Figur 9 gesendeten ersten dynamischen Identifikationscodes ist.

Wie der Fachmann anhand von Figur 9 erkennt, wird gemäß der dort dargestellten erfindungsgemäßen Variante bei weiteren Auslesevorgängen (d.h. M > 1) entsprechend verfahren. Beispielsweise wird im Rahmen eines zweiten Auslesevorgangs (M=2) vom RFID-Tag 20a in Schritt S11' von Figur 9 der zweite dynamische Identifikationscode einschließlich des zweiten Identifikationselements an das Lesegerät 30a übermittelt, das durch die (N-1)-fache Anwendung der Hashfunktion h auf die Verkettung der Zufallszahl RND1 mit dem geheimen Schlüssel KM berechnet worden ist (beispielsweise mittels der Schritte S8' bis S10' von Figur 9). Daraufhin wird vom Lesegerät 30a (und/ oder dem mit diesem verbundenen Hintergrundsystem 50) der Hashwert des zweiten Identifikationselementes des vom RFID-Tag 20a übermittelten zweiten dynamischen Identifikationscodes durch Anwendung der Hashfunktion h darauf berechnet und schließlich wird vom Lesegerät 30a (und/ oder dem mit diesem verbundenen Hintergrundsystem 50) der so berechnete Hashwert mit dem beim vorhergehenden Auslesevorgang übermittelten Identifikationselement, d.h. im Fall des zweiten Auslesevorgangs (M=2) mit dem ersten Identifikationselement, verglichen. Wird bei diesem Vergleich festgestellt, dass der Hashwert gleich dem beim vorhergehenden Auslesevorgang verwendeten Identifikationselement ist, kann das RFID-Tag 20a mittels der Daten identifiziert werden, die mit dem beim vorhergehenden Auslesevorgang verwendeten Identifikationselement bzw. dynamischen Identifikationscode verknüpft sind. Anschließend wird der beim aktuellen Auslesevorgang vom RFID-Tag 20a in Schritt S11' von Figur 9 übersendete dynamische Identifikationscode einschließlich des Identifikationselements zusammen mit diesen Daten im Lesegerät 30a (und/ oder dem mit diesem verbundenen Hintergrundsystem 50) hinterlegt (Schritt S13a' von Figur 9), indem beispielsweise das beim vorhergehenden Auslesevorgang vom identifizierten RFID-Tag 20a verwendete Identifikationselement durch das aktuelle Identifikationselement überschrieben wird.

Falls im Lesegerät 30a (und/ oder dem Hintergrundsystem 50) kein Identifikationselement gefunden werden kann, das gleich dem Hashwert des Identifikationselements des vom RFID-Tag 20a übermittelten dynamischen Identifikationscodes ist, kann das RFID-Tag 20a in der Regel nicht identifiziert werden. Dieser Fall kann beispielsweise dann eintreten, wenn zwischen zwei Auslesevorgängen durch die Lesegeräte 30a, 30b des Systems 10 das RFID-Tag 20a durch ein Lesegerät ausgelesen worden ist, das nicht Teil des Systems 10 ist, beispielsweise durch ein Lesegerät eines potentiellen Angreifers. In diesem Fall müssen das RFID-Tag 20a und die Lesegeräte 20a, 30b (und/ oder das mit diesen verbundene Hintergrundsystem 50) wieder synchronisiert werden, und zwar vorzugsweise mittels der in Figur 10 dargestellten erfindungsgemäßen Variante eines Synchronisationsprozesses.

Figur 10 zeigt eine erfindungsgemäße Variante des in Figur 7 dargestellten Synchronisationsprozesses zwischen dem RFID-Tag 20a und dem Lesegerät 30a (und/oder dem mit diesem verbundenen Hintergrundsystem 50) zur Erzeugung eines neuen Satzes von dynamischen Identifikationscodes. In Schritt S14' von Figur 10 erzeugt das Lesegerät 30a (und/oder das mit diesem verbundene Hintergrundsystem 50) einen Session-Key KS auf der Grundlage des vom RFID-Tag 20a übersendeten, nicht identifizierbaren Identifikationselements (oder alternativ auf der Grundlage des entsprechenden dynamischen Identifikationscodes) und eines geheimen Schlüssels. Da die in Figur 10 dargestellte erfindungsgemäße Variante des Synchronisationsprozesses insbesondere dann durchgeführt wird, wenn ein von einem RFID-Tag 20a ausgelesener dynamischer Identifikationscode mit einem Identifikationselement nicht identifiziert, d.h. keinem RFID-Tag zugeordnet werden kann, handelt es sich bei dem geheimen Schlüssel vorzugsweise um den Systemschlüssel KM, der sowohl auf allen RFID-Tags als auch auf den Lesegeräten (und/ oder dem mit diesen verbundenen Hintergrundsystem 50) des Systems 10 zur Verfügung steht. Die Verwendung des auf allen RFID-Tags hinterlegten Schlüssels KM stellt keine potenzielle Gefahr dar, weil in die Ableitung des Session-Keys KS neben dem als Masterkey dienenden Systemschlüssel KM der zuletzt vom RFID-Tag 20a übermittelte dynamische Identifikationscode (bzw. dessen Identifikationselement) einfließt, der aufgrund des individuellen Identifikationselements für jedes RFID-Tag des Systems 10 individuell ist.

Als Schlüsselableitungsfunktion zur Ableitung des Session-Keys KS kann vorzugsweise die Hashfunktion h verwendet werden, indem der Hashwert der Verkettung bzw. Konkatenation des vom RFID-Tag 20a zuletzt übermittelten dynamischen Identifikationscodes mit dem Systemschlüssel KM berechnet wird, d.h. KS = h(ID-Code | KM), wobei ID-Code für den vom RFID-Tag 20a zuletzt übermittelten dynamischen Identifikationscode steht. Alternativ kann der Session-Key KS durch eine andere Verknüpfung des zuletzt vom RFID-Tag 20a übermittelten dynamischen Identifikationscodes mit dem Systemschlüssel KM erhalten werden, z.B. durch eine XOR-Verknüpfung, oder mittels einer anderen Schlüsselableitungsfunktion abgeleitet werden, in die der zuletzt vom RFID-Tag 20a übermittelte dynamische Identifikationscode und der Systemschlüssel KM einfließen. Gemäß einer weiteren alternativen Ausführungsform kann für die Ableitung des Session-Keys KS statt des zuletzt übermittelten dynamischen Identifikationscodes auch nur dessen dynamischer Anteil, d.h. das Identifikationselement des dynamischen Identifikationscode verwendet werden.

Neben der Berechnung des Session-Keys KS wird von dem Lesegerät 30a (und/ oder dem mit diesem verbundenen Hintergrundsystem 50) eine Zufallszahl RND2 erzeugt, z.B. mittels eines dem Fachmann bekannten deterministischen Zufallszahlengenerator, der als Software und/ oder Hardware implementiert sein kann. Diese Zufallszahl RND2 wird mit dem in Schritt S14' von Figur 10 erstellten Session-Key KS verschlüsselt, wodurch man eine verschlüsselte Zufallszahl C = ENC(RND2, KS) erhält (Schritt S15' von Figur 10). Dabei kann die Verschlüsselung der Zufallszahl RND2 mit dem Session-Key KS durch einen beliebigen bekannten symmetrischen Verschlüsselungsalgorithmus erfolgen, wie beispielsweise DES, Triple-DES, AES und dergleichen.

In Schritt S16' von Figur 10 wird die verschlüsselte Zufallszahl C zusammen mit einer Zahl N', die die Anzahl der neu zu bestimmenden dynamischen Identifikationscodes zur Identifizierung des RFID-Tags 20a bestimmt, an das RFID-Tag 20a übertragen. Dabei kann es sich bei der Zahl N' um die bereits bei der Initialisierung bzw. Personalisierung verwendete Zahl N oder um eine andere, neu erzeugte Zahl handeln. Vorzugsweise werden die Daten, d.h. die verschlüsselte Zufallszahl C und die Zahl N', in Schritt S16' von Figur 10 mittels eines speziellen APDU-Kommandos vom Lesegerät 30a an das RFID-Tag 20a gesendet, als dessen Träger wiederum das dem Fachmann bekannte "BlockWrite"-Kommando verwendet wird. Auf der Grundlage des zuletzt übermittelten dynamischen Identifikationscodes und des sicher im RFID-Tag 20a hinterlegten Schlüssels KM erzeugt nun das RFID-Tag 20a seinerseits in Schritt S17' von Figur 10 einen Session-Key KS, und zwar auf dieselbe Weise wie das Lesegerät 30a (und/ oder das mit diesem verbundene Hintergrundsystem 50). Mit anderen Worten: Das RFID-Tag 20a berechnet den Session-Key KS, indem vorzugsweise der Hashwert der Verkettung bzw. Konkatenation des vom RFID-Tag 20a zuletzt übermittelten dynamischen Identifikationscodes (alternativ dessen Identifikationselements) mit dem geheimen, im RFID-Tag 20a sicher hinterlegten Schlüssel KM berechnet wird, d.h. KS = h(ID-Code | KM). Daraufhin wird die in Schritt S16' von Figur 10 vom Lesegerät 30a übersendete verschlüsselte Zufallszahl (C = ENC(RND2, KS)) mittels des vom RFID-Tag 20a in Schritt S17' von Figur 10 berechneten Session-Keys KS entschlüsselt (Schritt S18' von Figur 10).

In Schritt S19' von Figur 10 werden die zur Ableitung der dynamischen Identifikationscodes des neuen Satzes von dynamischen Identifikationscodes erforderlichen Daten im RFID-Tag 20a hinterlegt, nämlich vorzugsweise der vom RFID-Tag 20a zuletzt übermittelte dynamische Identifikationscode (alternativ dessen Identifikationselement), der in Schritt S17' von Figur 10 erzeugte Session-Key KS und die Zahl N', die die Anzahl der Elemente der Liste von Identifikationselementen bzw. dynamischen Identifikationscodes bestimmt. Ferner kann in Schritt 19' von Figur 10 ein im RFID-Tag 20a implementierter Auslesungszähler zurückgesetzt, d.h. auf Null gesetzt werden. Anhand des vom RFID-Tag 20a zuletzt übermittelten dynamischen Identifikationscodes (alternativ dessen Identifikationselements), des Session-Keys KS und der Zahl N' (und ggf. der vorzugsweise durch einen Auslesungszähler gelieferten Information darüber, um den wievielten Auslesevorgang es sich handelt) kann das RFID-Tag 20a bei jedem Auslesevorgang "on the fly" ein neues Identifikationselement (oder alternativ einen neuen dynamischen Identifikationscode) berechnen, das vom Lesegerät 30a und/oder dem Hintergrundsystem 50 identifiziert werden kann.

Vorzugsweise nach der Hinterlegung der zur Ableitung der dynamischen Identifikationscodes des neuen Satzes von dynamischen Identifikationscodes erforderlichen Daten im RFID-Tag 20a in Schritt S19' von Figur 10 kann das RFID-Tag 20a eine Bestätigung der Synchronisation an das Lesegerät 30a in der folgenden Form schicken. Zunächst verkettet bzw. konkateniert das RFID-Tag 20a die Zufallszahl RND2, die ursprünglich in Schritt S16' von Figur 10 in verschlüsselter Form unter Verwendung des Session-Keys KS vom Lesegerät 30a an das RFID-Tag 20a übermittelt worden ist und mittels des vom RFID-Tag 20a erzeugten Session-Keys KS entschlüsselt worden ist (Schritte S17' und S18' von Figur 10), mit der eindeutigen Seriennummer SNR des RFID-Tags 20a. Die Seriennummer SNR kann zum einen beispielsweise im gesicherten Speicherbereich 28a des Speichers 28 des RFID-Tags 20a und zum anderen im Hintergrundsystem 50 zusammen mit anderen mit dem RFID-Tag 20a verknüpften Daten derart sicher hinterlegt sein, dass die Seriennummer SNR eine eindeutige Identifizierung des RFID-Tags 20a ermöglicht, wie dies vorstehend im Zusammenhang mit Figur 4 beschrieben worden ist. Die Verkettung bzw. Konkatenation der Zufallszahl RND2 mit der eindeutigen Seriennummer SNR wird sodann mittels des vom RFID-Tag 20 abgeleiteten Session-Keys KS verschlüsselt und das Ergebnis der Verschlüsselung in Schritt S21' von Figur 10 an das Lesegerät 30a übertragen. Wie der Fachmann erkennt, muss bei der Verkettung von Schritt S20' von Figur 10 im Gegensatz zu einigen vorstehend beschriebenen Operationen, bei denen der Hashwert einer Verkettung bzw. Konkatenation von zwei Elementen gebildet wurde, nicht darauf geachtet werden, dass das RFID-Tag 20a und das Lesegerät 30a (und/ oder das mit diesem verbundene Hintergrundsystem 50) die Elemente der Verkettung in derselben Reihenfolge miteinander verketten.

In Schritt S22' von Figur 10 wird die vom RFID-Tag 20a übermittelte verschlüsselte Verkettung der Zufallszahl RND2 mit der eindeutige Seriennummer SNR von dem Lesegerät 30a (und/ oder dem mit diesem verbundenen Hintergrundsystem 50) mit dem in Schritt S14' von Figur 10 erzeugten Session-Key KS entschlüsselt. Im Fall einer erfolgreichen Entschlüsselung liegen dem Lesegerät 30a (und/ oder dem mit diesem verbundenen Hintergrundsystem 50) als deren Ergebnis sowohl die Zufallszahl RND2 als auch die eindeutige Seriennummer SNR des RFID-Tags 20a im Klartext vor. Vorzugsweise wird in Schritt S22' von Figur 10 ferner überprüft, ob die so gewonnene Zufallszahl RND2 gleich der ursprünglich von dem Lesegerät 30a (und/ oder dem mit diesem verbundenen Hintergrundsystem 50) in Schritt S15' von Figur 10 erzeugten Zufallszahl RND2 ist.

Falls diese Überprüfung zu dem Ergebnis kommt, dass die beiden Zufallszahlen gleich sind, ist zum einen sichergestellt, dass das Lesegerät 30a (und/ oder das mit diesem verbundene Hintergrundsystem 50) und das RFID-Tag 20a den gleichen Session-Key KS verwendet haben. Ferner kann in Schritt S23' von Figur 10 das Lesegerät 30a (und/ oder das mit diesem verbundene Hintergrundsystem 50) anhand der nun ebenfalls im Klartext vorliegenden Seriennummer SNR des RFID-Tags 20a das RFID-Tag 20a eindeutig identifizieren. Dies geschieht vorzugsweise dadurch, dass das Hintergrundsystem 50 in seiner Datenbank nach dieser (ggf. in Verbindung mit dem statischen Anteil des entsprechenden dynamischen Identifikationscodes) eindeutigen Seriennummer SNR und den mit dieser Seriennummer verknüpften Daten sucht. Nachdem das Lesegerät 30a (und/ oder das mit diesem verbundene Hintergrundsystem 50) in Schritt S23' von Figur 10 anhand der Seriennummer SNR (ggf. in Verbindung mit dem statischen Anteil des dynamischen Identifikationscodes) ermittelt hat, um welches RFID-Tag es sich bei dem RFID-Tag 20a handelt, kann das Lesegerät 30a (und/ oder das mit diesem verbundene Hintergrundsystem 50) analog zu den in Figur 8 dargestellten Schritten S4' bis S6', bei denen die Zufallszahl RND1 in die Berechnung des Hashwerts des ersten Identifikationselements einfließt, den Hashwert des ersten Identifikationselements (oder alternativ des ersten Identifikationscodes) berechnen, indem die Hashfunktion h (N'+1)-fach auf die Verkettung des vom RFID-Tag 20a zuletzt übermittelten dynamischen Identifikationscode (oder alternativ dessen Identifikationselement) mit dem Session-Key KS angewendet wird und das Ergebnis davon in dem Lesegerät 30a (und/ oder dem mit diesem verbundenen Hintergrundsystem 50) hinterlegt wird. Wie dies im Zusammenhang mit dem in Figur 9 dargestellten Auslesevorgang beschrieben worden ist, kann das Lesegerät 30a (und/ oder das mit diesem verbundene Hintergrundsystem 50) bei einem nach der Synchronisation erfolgenden Auslesevorgang diesen Hashwert mit dem Hashwert des Identifikationselements des vom RFID-Tag 20a übermittelten ersten dynamischen Identifikationscodes vergleichen und, falls bei dem Vergleich festgestellt wird, dass diese Werte übereinstimmen, das RFID-Tag 20a eindeutig identifizieren.

Wie der Fachmann erkennt, lassen sich aufgrund der gegenseitigen Übersendung der Zufallszahl RND2 in verschlüsselter Form der Schritt S16' des Synchronisationsprozess von Figur 10 als die Challenge und der Schritt S21' davon als die Response einer Challenge-Response-Authentisierung zwischen dem Lesegerät 30a (und/ oder dem mit diesem verbundenen Hintergrundsystem 50) und dem RFID-Tag 20a auffassen. Erfindungsgemäß wird diese Challenge-Response-Authentisierung jedoch nicht bei jedem Auslesevorgang durchgeführt, sondern nur dann, wenn das RFID-Tag 20a und das Lesegerät 30a (und/ oder dem mit diesem verbundenen Hintergrundsystem 50) synchronisiert werden müssen, d.h. das RFID-Tag 20a anhand des übermittelten dynamischen Identifikationscodes und der im Hintergrundsystem hinterlegten Daten nicht identifiziert werden kann.

Bei einer Abwandlung der vorstehend unter Bezugnahme auf Figur 10 beschriebenen erfindungsgemäßen Variante eines Synchronisationsprozesses wird dieser ohne die Erzeugung und die Verwendung der Zufallszahl RND2 durchgeführt. Wie der Fachmann erkennt, würde bei dieser alternativen Ausführungsform zwar die vorstehend beschriebene Challenge-Response-Authentisierung zwischen dem RFID-Tag 20a und/oder dem Lesegerät 30a (und/ oder dem mit diesem verbundenen Hintergrundsystem 50) entfallen, aber die Serienummer SNR zur eindeutigen Identifizierung des RFID-Tags 20a könnte immer noch in verschlüsselter Form an das Lesegerät 30a übertragen werden.

Bei einer weiteren Abwandlung der vorstehend unter Bezugnahme auf Figur 10 beschriebenen erfindungsgemäßen Variante eines Synchronisationsprozesses können wie im Fall des in Figur 7 dargestellten Synchronisationsprozess in den Schritten S19' und/oder S23' von Figur 10 der gesamte Satz von N' dynamischen Identifikationscodes (oder alternativ deren Identifikationselemente) abgeleitet und in dem RFID-Tag 20a und/oder in dem Lesegerät 30a (bzw. in dem mit diesem verbundenen Hintergrundsystem 50) hinterlegt werden. Für eine entsprechende Beschreibung der Ableitung der N' dynamischen Identifikationscodes (oder alternativ deren Identifikationselemente) auf der Grundlage des vom RFID-Tag 20a zuletzt übermittelten dynamischen Identifikationscodes (oder alternativ dessen Identifikationselements) und des Session-Key KS wird auf die vorstehende Beschreibung der Schritte S4' bis S6' von Figur 8 verwiesen.

Bei einer weiteren erfindungsgemäßen Variante ist es vorstellbar, dass im RFID-Tag 20a lediglich die Daten zur Berechnung der dynamischen Identifikationscodes (oder alternativ deren Identifikationselemente) hinterlegt werden und der jeweils passende dynamische Identifikationscode (oder alternativ dessen Identifikationselement) bei jedem Auslesevorgang anhand dieser Daten durch das RFID-Tag 20a "on the fly" berechnet wird, während in dem Lesegerät 30a (und/ oder dem mit diesem verbundenen Hintergrundsystem 50) der gesamte Satz von dynamischen Identifikationscodes (oder alternativ Identifikationselementen) hinterlegt sind. Der umgekehrte Fall ist ebenso denkbar, d.h. eine Hinterlegung des gesamten Satzes von dynamischen Identifikationscodes (oder alternativ Identifikationselementen) im RFID-Tag 20a, während in dem Lesegerät 30a (und/ oder dem mit diesem verbundenen Hintergrundsystem 50) lediglich die Daten hinterlegt werden, die zur Ableitung der dynamischen Identifikationscodes (oder alternativ deren Identifikationselemente) erforderlich sind.
Gemäß einer anderen Variante ist es vorstellbar, dass in Schritt S6' von Figur 8 nicht der Hashwert des ersten Identifikationselements (oder alternativ des ersten dynamischen Identifikationscodes) in dem Lesegerät 30a (und/ oder dem mit diesem verbundenen Hintergrundsystem 50) hinterlegt wird, sondern das erste Identifikationselement (oder alternativ der erste dynamische Identifikationscode) selbst. Entsprechend würde beim ersten Auslesevorgang bei dieser Variante in Schritt S12' von Figur 9 nicht der Hashwert des Identifikationselements des vom RFID-Tag 20a übermittelten ersten Identifikationscodes, sondern dieses erste Identifikationselement (oder alternativ dieser erste dynamische Identifikationscode) selbst mit dem in dem Lesegerät 30a (und/ oder dem mit diesem verbundenen Hintergrundsystem 50) hinterlegten Identifikationselement bzw. dynamischen Identifikationscode verglichen werden. Nur bei weiteren Auslesevorgängen (M > 1) würde bei dieser Variante das Lesegerät 30a (und/oder das mit diesem verbundene Hintergrundsystem 50) in Schritt S12' von Figur 9 den Hashwert des Identifikationselements des vom RFID-Tag 20a übermittelten Identifikationscodes bilden und diesen mit dem im Lesegerät 30a (und/ oder dem mit diesem verbundenen Hintergrundsystem 50) hinterlegten Identifikationselement eines vorhergehenden Auslesevorgangs vergleichen.

Bei der in Figur 9 dargestellten erfindungsgemäßen Variante eines Auslesevorgangs ist als weitere Abwandlung denkbar, dass das Lesegerät 30a (und/ oder das mit diesem verbundene Hintergrundsystem 50) in Schritt S12' dazu ausgestaltet ist, die Hashfunktion h nicht nur einmal auf das Identifikationselement des vom RFID-Tag 20a übermittelten Identifikationscodes, sondern mehrere Male darauf anzuwenden und die dabei jeweils berechneten Hashwerte mit dem bzw. den in dem Lesegerät 30a (und/ oder dem mit diesem verbundenen Hintergrundsystem 50) hinterlegten Identifikationselement(en) zu vergleichen. Mittels dieser Ausgestaltung können zwischenzeitliche Auslesevorgänge durch ein Lesegerät, das nicht in das System 10 integriert ist, kompensiert werden.

Der Fachmann wird erkennen, dass, obgleich bei den in den Figuren 5 bis 7 dargestellten Varianten eine schlüsselabhängige Einwegfunktion, vorzugsweise in Form eines MAC und bei den in den Figuren 8 bis 10 dargestellten Varianten eine Einwegfunktion, vorzugsweise in Form einer Hashfunktion, verwendet wird, weitere erfindungsgemäße Alternativen denkbar sind, die dadurch zustande kommen, dass bei den in den Figuren 5 bis 7 dargestellten Varianten eine Hashfunktion und bei den in den Figuren 8 bis 10 dargestellten Varianten eine schlüsselabhängige Einwegfunktion, vorzugsweise in Form eines MAC, zur Ableitung der dynamischen Identifikationscodes verwendet werden. Die vorstehend beschriebenen erfindungsgemäßen Varianten lassen sich somit mit den vorstehenden im Zusammenhang mit den Figuren 5 bis 7 beschriebenen bevorzugten Ausführungsformen prinzipiell beliebig kombinieren, wodurch weitere erfindungsgemäße Ausführungsformen gebildet werden, die Teil der vorliegenden Offenbarung sind.

Beispielsweise ist eine erfindungsgemäße Ausführungsform denkbar, bei der zur Ableitung eines neuen Satzes von dynamischen Identifikationscodes eine schlüsselabhängige Einwegfunktion, vorzugsweise in Form eines Message Authentication Codes, verwendet wird, wobei bei der Ableitung der dynamischen Identifikationscodes die Reihenfolge der mittels der schlüsselabhängigen Einwegfunktion berechneten Funktionswerte bzw. Identifikationselemente umgekehrt wird, im RFID-Tag 20a der dynamische Identifikationscode bei jedem Auslesevorgang "on the fly" berechnet wird und im Lesegerät 30a immer der beim letzten Auslesevorgang übermittelte dynamische Identifikationscode hinterlegt wird. Der Fachmann wird erkennen, dass bei dieser erfindungsgemäßen Ausführungsform, bei der die Reihenfolge der mittels der schlüsselabhängigen Einwegfunktion berechneten Funktionswerte bzw. Identifikationselemente umgekehrt wird, je nachdem um den wievielten Auslesevorgang es sich handelt, im RFID-Tag 20a eine unterschiedliche Anzahl von Rechenschritten notwenig sind, um den dynamischen Identifikationscode "on the fly" zu berechnen. Dies vereinfacht sich bei einer weiteren erfindungsgemäßen Ausführungsform, bei der keine Umkehrung der Reihenfolge der mittels der schlüsselabhängigen Einwegfunktion berechneten Funktionswerte bzw. Identifikationselemente erfolgt, dadurch, dass in dem RFID-Tag 20a jeweils nur der beim letzten Auslesevorgang übermittelte dynamische Identifikationscode hinterlegt werden muss und zur Ableitung eines dynamischen Identifikationscodes für den folgenden Auslesevorgang lediglich die schlüsselbasierte Einwegfunktion auf das Identifikationselement des beim letzten Auslesevorgang übermittelten dynamischen Identifikationscode angewendet werden muss.

Wie der Fachmann erkennen wird, müssen die einzelnen Schritte der in den Figuren 5 bis 10 dargestellten Prozesse nicht unbedingt in der dargestellten zeitlichen Abfolge ablaufen. Ersichtlich ist dies nur dort erforderlich, wo die Ergebnisse eines Schrittes die Eingabedaten eines weiteren Schrittes darstellen.

## Patentansprüche

1. Verfahren zur Kommunikation zwischen einem RFID-Tag (20a, 20b) und einem Lesegerät (30a, 30b), wobei das Verfahren die folgenden Schritte umfasst:
Ableiten eines Satzes von N dynamischen Identifikationscodes unter Verwendung einer schlüsselabhängigen Einwegfunktion f, wobei jeder dynamische Identifikationscode ein modifizierter elektronischer Produktcode, EPC, ist, der aus einem statischen Anteil eines EPC und einem dynamischen Anteil in Form eines dynamischen Identifikationselements abweichend von einer im EPC vorhandenen statischen Seriennummer des RFID-Tags (20a, 20b) besteht und wobei die schlüsselabhängige Einwegfunktion f rekursiv N-mal auf einen Startwert angewendet wird und der sich dabei ergebende Satz von N Funktionswerten der schlüsselabhängigen Einwegfunktion f zur Ableitung des Satzes von N dynamischen Identifikationscodes verwendet wird; und
Übertragen jeweils eines dynamischen Identifikationscodes des Satzes von N dynamischen Identifikationscodes, der sich von Auslesevorgang zu Auslesevorgang ändert, von dem RFID-Tag (20a, 20b) an das Lesegerät (30a, 30b), um das RFID-Tag (20a, 20b) eindeutig identifizieren zu können.

2. Verfahren nach Anspruch 1, wobei beim Ableiten des Satzes von N dynamischen Identifikationscodes die Reihenfolge des Satzes von N Funktionswerten, die sich aus der rekursiven Anwendung der schlüsselabhängigen Einwegfunktion f ergeben, umgedreht wird.

3. Verfahren zur Kommunikation zwischen einem RFID-Tag (20a, 20b) und einem Lesegerät (30a, 30b), wobei das Verfahren die folgenden Schritte umfasst:
Ableiten eines Satzes von N dynamischen Identifikationscodes unter Verwendung einer Einwegfunktion h, wobei die Einwegfunktion h rekursiv N-mal auf einen Startwert angewendet wird und der sich dabei ergebende Satz von N Funktionswerten der Einwegfunktion h zur Ableitung des Satzes von N dynamischen Identifikationscodes verwendet wird, wobei jeder dynamische Identifikationscode ein modifizierter elektronischer Produktcode, EPC, ist, der aus einem statischen Anteil und einem dynamischen Anteil abweichend von einer im EPC vorhandenen statischen Seriennummer des RFID-Tags (20a, 20b) in Form eines dynamischen Identifikationselements besteht und wobei beim Ableiten des Satzes von N dynamischen Identifikationscodes die Reihenfolge des Satzes von N Funktionswerten, die sich aus der rekursiven Anwendung der Einwegfunktion h ergeben, umgedreht wird; und
Übertragen jeweils eines dynamischen Identifikationscodes des Satzes von N dynamischen Identifikationscodes, der sich von Auslesevorgang zu Auslesevorgang ändert, von dem RFID-Tag (20a, 20b) an das Lesegerät (30a, 30b), um das RFID-Tag (20a, 20b) eindeutig identifizieren zu können.

4. Verfahren nach einem der Ansprüche 1 bis 3, wobei im Rahmen eines Initialisierungs- bzw. Personalisierungsprozesses in einer sicheren Umgebung wenigstes ein Schlüssel in dem RFID-Tag (20a, 20b) und dem Lesegerät (30a, 30b) und/oder einem mit diesem verbundenen Hintergrundsystem (50) hinterlegt wird, der in die Ableitung des Satzes von N dynamischen Identifikationscodes einfließt.

5. Verfahren nach Anspruch 4, wobei es sich bei dem wenigstens einen Schlüssel um einen Systemschlüssel, d.h. um einen auf allen RFID-Tags (20a, 20b) hinterlegten Schlüssel, und/oder um einen Tag-individuellen Schlüssel, d.h. um einen jeweils nur auf einem RFID-Tag (20a, 20b) hinterlegten Schlüssel, handelt.

6. Verfahren nach Anspruch 5, wobei der Schlüssel als Masterkey zur Ableitung eines jeweiligen Session-Keys verwendet wird und der jeweilige Session-Key in die Ableitung des Satzes von dynamischen Identifikationscodes einfließt.

7. Verfahren nach einem der Ansprüche 1 bis 3, wobei im Rahmen eines Initialisierungs- bzw. Personalisierungsprozesses zwischen dem RFID-Tag (20a, 20b) und dem Lesegerät (30a, 30b) die Zahl N vereinbart wird, die die Anzahl der abzuleitenden Elemente des Satzes von dynamischen Identifikationscodes bestimmt.

8. Verfahren nach einem der Ansprüche 1 bis 3, wobei für den Fall, dass das RFID-Tag (20a, 20b) anhand des dynamischen Identifikationscodes nicht vom Lesegerät (30a, 30b) identifiziert werden kann, ein Synchronisationsprozess zwischen dem Lesegerät (30a, 30b) und dem RFID-Tag (20a, 20b) durchgeführt wird, im Rahmen dessen ein neuer Satz von dynamischen Identifikationscodes abgeleitet wird.

9. Verfahren nach Anspruch 8, wobei bei jedem Synchronisationsprozess ein neuer Startwert zur Ableitung des neuen Satzes von dynamischen Identifikationscodes verwendet wird, wobei vorzugsweise der nicht identifizierbare dynamische Identifikationscode als neuer Startwert oder als Ausgangspunkt zur Berechnung eines neuen Startwerts verwendet wird.

10. Verfahren nach Anspruch 8, wobei im Rahmen des Synchronisationsprozesses vom RFID-Tag (20a, 20b) eine im RFID-Tag (20a, 20b) hinterlegte eindeutige statische Seriennummer, vorzugsweise in verschlüsselter Form, an das Lesegerät (30a, 30b) übertragen wird, die eine eindeutige Identifizierung des RFID-Tags (20a, 20b) ermöglicht.

11. Verfahren nach Anspruch 8, wobei im Rahmen des Synchronisationsprozesses eine Challenge-Response-Authentisierung zwischen dem Lesegerät (30a, 30b) und dem RFID-Tag (20a, 20b) durchgeführt wird, wobei bei der Challenge-Response-Authentisierung auf Seiten des RFID-Tags (20a, 20b) und auf Seiten des Lesegeräts (30a, 30b) ein Session-Key verwendet wird, der vorzugsweise aus dem nicht identifizierbaren dynamischen Identifikationscode und dem Systemschlüssel abgleitet wird, der in dem RFID-Tag (20a, 20b) und in dem Lesegerät (30a, 30b) und/oder in dem mit diesem verbundenen Hintergrundsystem (50) hinterlegt ist, wobei vorzugsweise bei der Challenge-Response-Authentisierung eine Zufallszahl mittels des Session-Keys verschlüsselt und in verschlüsselter Form als Challenge an das RFID-Tag (20a, 20b) übertragen wird.

12. Verfahren nach einem der Ansprüche 1 bis 3, wobei alle im Rahmen des Initialisierungs- bzw. Personalisierungsprozesses und/oder des Synchronisationsprozesses abgeleiteten dynamischen Identifikationscodes im RFID-Tag (20a, 20b) und/oder im Lesegerät (30a, 30b) und/oder in dem mit diesem verbundenen Hintergrundsystem (50) hinterlegt werden, oder
wobei im Rahmen des Initialisierungs- bzw. Personalisierungsprozesses und/oder des Synchronisationsprozesses im RFID-Tag (20a, 20b) lediglich die in die Ableitung der dynamischen Identifikationscodes einfließenden Parameter hinterlegt werden, insbesondere der Startwert und die Zahl N, oder
wobei im Rahmen des Initialisierungs- bzw. Personalisierungsprozesses und/oder des Synchronisationsprozesses im Lesegerät (30a, 30b) und/oder in dem mit diesem verbundenen Hintergrundsystem (50) lediglich der erste dynamische Identifikationscode des Satzes von dynamischen Identifikationscodes hinterlegt wird.

13. Verfahren nach einem der vorhergehenden Ansprüche, wobei es sich bei dem RFID-Tag (20a, 20b) um ein UHF-Tag nach ISO/IEC 18000-63 bzw. Class-1 Gen-2 EPC handelt und wobei der dynamische Identifikationscode derart als modifizierter EPC ausgestaltet ist, dass die ersten 60 Bits des Identifikationscodes dieselben Bedeutungen wie die ersten 60 Bits eines "registrierten" EPC haben und die verbleibenden 36 Bits des dynamischen Identifikationscodes das dynamische Identifikationselement ausbilden.

14. RFID-Tag (20a, 20b) zur Kommunikation mit einem Lesegerät (30a, 30b), wobei das RFID-Tag (20a, 20b) dazu ausgestaltet ist, das Verfahren nach einem der Ansprüche 1 bis 13 auszuführen.

15. Lesegerät (30a, 30b) zur Kommunikation mit einem RFID-Tag (20a, 20b), wobei das Lesegerät (30a, 30b) dazu ausgestaltet ist, das Verfahren nach einem der Ansprüche 1 bis 13 auszuführen.

## Claims

1. A method for the communication between an RFID tag (20a, 20b) and a reading device (30a, 30b), wherein the method comprises the following steps:
deriving a set of N dynamic identification codes using a key-dependent one-way function f, wherein each dynamic identification code is a modified electronic product code, EPC, which consists of a static portion of an EPC and a dynamic portion in the form of a dynamic identification element deviating from a static serial number of the RFID tag (20a, 20b) available in the EPC and wherein the key-dependent one-way function f is recursively applied N times to a start value and the thus resulting set of N function values of the key-dependent one-way function f is used for the derivation of the set of N dynamic identification codes; and
transmitting respectively one dynamic identification code of the set of N dynamic identification codes, which changes from reading operation to reading operation, from the RFID tag (20a, 20b) to the reading device (30a, 30b) in order to be able to unambiguously identify the RFID tag (20a, 20b).

2. The method according to claim 1, wherein upon deriving the set of N dynamic identification codes the order of the set of N function values resulting from the recursive application of the key-dependent one-way function f is reversed.

3. A method for the communication between an RFID tag (20a, 20b) and a reading device (30a, 30b), wherein the method comprises the following steps:
deriving a set of N dynamic identification codes using a one-way function h, wherein the one-way function h is recursively applied N times to a start value and the thus resulting set of N function values of the one-way function h is used for the derivation of the set of N dynamic identification codes, wherein each dynamic identification code is a modified electronic product code, EPC, which consists of a static portion and a dynamic portion deviating from a static serial number of the RFID tag (20a, 20b) available in the EPC in the form of a dynamic identification element and wherein upon deriving the set of N dynamic identification codes the order of the set of N function values which result from the recursive application of the one-way function H is reversed; and
transmitting respectively one dynamic identification code of the set of N dynamic identification codes, which changes from reading operation to reading operation, from the RFID tag (20a, 20b) to the reading device (30a, 30b) in order to be able to unambiguously identify the RFID tag (20a, 20b).

4. The method according to any of claims 1 to 3, wherein within the framework of an initialization or personalization process in a secure environment there is deposited at least one key in the RFID tag (20a, 20b) and the reading device (30a, 30b) and/or a background system (50) connected therewith, which key is incorporated into the derivation of the set of N dynamic identification codes.

5. The method according to claim 4, wherein the at least one key is a system key, i.e. it is a key deposited in all the RFID tags (20a, 20b) and/or it is a tag-individual key, i.e. a key deposited in respectively only one RFID tag (20a, 20b).

6. The method according to claim 5, wherein the key is used as a master key for the derivation of a respective session key and the respective session key is incorporated into the derivation of the set of dynamic identification codes.

7. The method according to any of claims 1 to 3, wherein within the framework of an initialization or personalization process between the RFID tag (20a, 20b) and the reading device (30a, 30b) the number N is agreed which determines the number of the elements of the set of dynamic identification codes to be derived.

8. The method according to any of claims 1 to 3, wherein in the case that the RFID tag (20a, 20b) cannot be identified by the reading device (30a, 30b) with the help of the dynamic identification code, a synchronisation process is performed between the reading device (30a, 30b) and the RFID tag (20a, 20b), within whose framework a new set of dynamic identification codes is derived.

9. The method according to claim 8, wherein upon each synchronisation process a new start value is used for the derivation of the new set of dynamic identification codes, wherein preferably the non-identifiable dynamic identification code is used as a new start value or as a starting point for the calculation of a new start value.

10. The method according to claim 8, wherein within the framework of the synchronisation process there is transmitted an unambiguous static serial number deposited in the RFID tag (20a, 20b), preferably in encrypted form, from the RFID tag (20a, 20b) to the reading device (30a, 30b), which enables an unambiguous identification of the RFID tag (20a, 20b).

11. The method according to claim 8, wherein within the framework of the synchronisation process there is performed a challenge-response authentication between the reading device (30a, 30b) and the RFID tag (20a, 20b), wherein upon the challenge-response authentication a session key is used on the part of the RFID tag (20a, 20b) and on the part of the reading device (30a, 30b), which is derived preferably from the non-identifiable dynamic identification code and the system key which is deposited in the RFID tag (20a, 20b) and in the reading device (30a, 30b) and/or in the background system (50) connected therewith, wherein preferably upon the challenge-response authentication a random number is encrypted by means of the session key and transmitted in encrypted form as a challenge to the RFID tag (20a, 20b).

12. The method according to any of claims 1 to 3, wherein all the dynamic identification codes derived within the framework of the initialization or personalization process and/or of the synchronisation process are deposited in the RFID tag (20a, 20b) and/or in the reading device (30a, 30b) and/or in the background system (50) connected therewith, or
wherein within the framework of the initialization or personalization process and/or of the synchronisation process, in the RFID tag (20a, 20b) there are deposited merely the parameters incorporated in the derivation of the dynamic identification codes, in particular the start value and the number N, or
wherein within the framework of the initialization or personalization process and/or of the synchronisation process, in the reading device (30a, 30b) and/or in the background system (50) connected therewith there is deposited merely the first dynamic identification code of the set of dynamic identification codes.

13. The method according to any of the preceding claims, wherein the RFID tag (20a, 20b) is an UHF tag according to ISO/IEC 18000-63 or Class-1 Gen-2 EPC and wherein the dynamic identification code is configured as a modified EPC such that the first 60 bits of the identification code have the same meanings as the first 60 bits of a "registered" EPC and the remaining 36 bits of the dynamic identification code form the dynamic identification element.

14. An RFID tag (20a, 20b) for the communication with a reading device (30a, 30b), wherein the RFID tag (20a, 20b) is configured for executing the method according to any of claims 1 to 13.

15. A reading device (30a, 30b) for the communication with an RFID tag (20a, 20b), wherein the reading device (30a, 30b) is configured for executing the method according to any of claims 1 to 13.

## Revendications

1. Procédé de communication entre une étiquette RFID (20a, 20b) et un appareil de lecture (30a, 30b), cependant que le procédé comprend les étapes suivantes :
dérivation d'un lot de N codes dynamiques d'identification en utilisant une fonction f à sens unique dépendante d'une clé, cependant que chaque code dynamique d'identification est un code produit électronique modifié, EPC, qui consiste en une part statique d'un EPC et en une part dynamique sous forme d'un élément dynamique d'identification divergeant d'un numéro statique de série de l'étiquette RFID (20a, 20b) contenu dans l'EPC, et cependant que la fonction f à sens unique dépendante d'une clé est appliquée de manière récursive N fois à une valeur de départ et que le lot en découlant de N valeurs de fonction de la fonction f à sens unique dépendante d'une clé est utilisée pour la dérivation du lot de N codes dynamiques d'identification ; et
transmission de respectivement un code dynamique d'identification du lot de N codes dynamiques d'identification qui change d'une opération de lecture à l'autre, de l'étiquette RFID (20a, 20b) à l'appareil de lecture (30a, 30b), afin de pouvoir identifier univoquement l'étiquette RFID (20a, 20b).

2. Procédé selon la revendication 1, cependant que, lors de la dérivation du lot de N codes dynamiques d'identification, l'ordre du lot de N valeurs de fonction qui découlent de l'application récursive de la fonction f à sens unique dépendante d'une clé est inversé.

3. Procédé de communication entre une étiquette RFID (20a, 20b) et un appareil de lecture (30a, 30b), cependant que le procédé comprend les étapes suivantes :
dérivation d'un lot de N codes dynamiques d'identification en utilisant une fonction h à sens unique, cependant que la fonction h à sens unique est appliquée de manière récursive N fois à une valeur de départ et que le lot en découlant de N valeurs de fonction de la fonction h à sens unique est utilisée pour la dérivation du lot de N codes dynamiques d'identification, cependant que chaque code dynamique d'identification est un code produit électronique modifié, EPC, qui consiste en une part statique et en une part dynamique divergeant d'un numéro statique de série de l'étiquette RFID (20a, 20b) contenu dans l'EPC, sous forme d'un élément dynamique d'identification, et cependant que, lors de la dérivation du lot de N codes dynamiques d'identification, l'ordre du lot de N valeurs de fonction qui découlent de l'application récursive de la fonction h à sens unique est inversé ; et
transmission de respectivement un code dynamique d'identification du lot de N codes dynamiques d'identification qui change d'une opération de lecture à l'autre, de l'étiquette RFID (20a, 20b) à l'appareil de lecture (30a, 30b), afin de pouvoir identifier univoquement l'étiquette RFID (20a, 20b).

4. Procédé selon une des revendications de 1 à 3, cependant que, dans le cadre d'un processus d'initialisation ou de personnalisation, dans un environnement sécurisé, au moins une clé est stockée dans l'étiquette RFID (20a, 20b) et dans l'appareil de lecture (30a, 30b) et/ou dans un système d'arrière-plan (50) relié à ce dernier, laquelle entre dans la dérivation du lot de N codes dynamiques d'identification.

5. Procédé selon la revendication 4, cependant que la au moins une clé consiste en une clé de système, c'est à dire en une clé stockée sur toutes les étiquettes RFID (20a, 20b), et/ou en une clé individuelle à une étiquette, c'est à dire en une clé respectivement stockée uniquement sur une étiquette RFID (20a, 20b).

6. Procédé selon la revendication 5, cependant que la clé est utilisée en tant que clé maître pour la dérivation d'une clé respective de session, et que la clé respective de session entre dans la dérivation du lot de codes dynamiques d'identification.

7. Procédé selon une des revendications de 1 à 3, cependant que, dans le cadre d'un processus d'initialisation ou de personnalisation entre l'étiquette RFID (20a, 20b) et l'appareil de lecture (30a, 30b), le chiffre N est convenu, lequel détermine le nombre des éléments à dériver, du lot de codes dynamiques d'identification.

8. Procédé selon une des revendications de 1 à 3, cependant que, dans le cas où l'étiquette RFID (20a, 20b) ne peut pas, à l'aide des codes dynamiques d'identification, être identifiée par l'appareil de lecture (30a, 30b), un processus de synchronisation entre l'appareil de lecture (30a, 30b) et l'étiquette RFID (20a, 20b) est exécuté, dans le cadre duquel un nouveau lot de codes dynamiques d'identification est dérivé.

9. Procédé selon la revendication 8, cependant que, à chaque processus de synchronisation, une nouvelle valeur de départ est utilisée pour la dérivation du nouveau lot de codes dynamiques d'identification, cependant que, de préférence, le code dynamique d'identification non identifiable est utilisé comme nouvelle valeur ou comme point initial pour le calcul d'une nouvelle valeur de départ.

10. Procédé selon la revendication 8, cependant que, dans le cadre du processus de synchronisation, par l'étiquette RFID (20a, 20b), un numéro statique de série univoque stocké dans l'étiquette RFID (20a, 20b) est, de préférence sous forme cryptée, transmis à l'appareil de lecture (30a, 30b) et permet une identification univoque de l'étiquette RFID (20a, 20b).

11. Procédé selon la revendication 8, cependant que, dans le cadre du processus de synchronisation, une authentification défi/réponse entre l'appareil de lecture (30a, 30b) et l'étiquette RFID (20a, 20b) est exécutée, cependant que, lors de l'authentification défi/réponse, du côté de l'étiquette RFID (20a, 20b) et du côté de l'appareil de lecture (30a, 30b), une clé de session est utilisée, laquelle, de préférence, est dérivée du code dynamique d'identification non identifiable et de la clé de système qui est stockée dans l'étiquette RFID (20a, 20b) et/ou dans le système d'arrière-plan (50) relié à ce dernier, cependant que, de préférence, lors de l'authentification défi/réponse, un chiffre aléatoire est crypté au moyen de la clé de session et est transmis sous forme cryptée en tant que défi à l'étiquette RFID (20a, 20b).

12. Procédé selon une des revendications de 1 à 3, cependant que tous les codes dynamiques d'identification dérivés dans le cadre du processus d'initialisation ou de personnalisation et/ou du du processus de synchronisation sont stockés dans l'étiquette RFID (20a, 20b) et/ou dans l'appareil de lecture (30a, 30b) et/ou dans le système d'arrière-plan (50) relié à ce dernier, ou
cependant que, dans le cadre du processus d'initialisation ou de personnalisation et/ou du du processus de synchronisation, dans l'étiquette RFID (20a, 20b), uniquement les paramètres entrant dans la dérivation des codes dynamiques d'identification sont stockés, en particulier la valeur de départ et le chiffre N, ou
cependant que, dans le cadre du processus d'initialisation ou de personnalisation et/ou du du processus de synchronisation, dans l'appareil de lecture (30a, 30b) et/ou dans le système d'arrière-plan (50) relié à ce dernier, , uniquement le premier code dynamique d'identification du lot de codes dynamiques d'identification est stocké.

13. Procédé selon une des revendications précédentes, cependant que l'étiquette RFID (20a, 20b) consiste en une étiquette UHF conformément à ISO/IEC 18000-63 ou Class-1 Gen-2 EPC, et cependant que le code dynamique d'identification est réalisé de telle façon en tant que EPC modifié que les 60 premiers bits du code d'identification ont les mêmes significations que les 60 premiers bits d'un EPC « enregistré » et que les 36 bits restants du code dynamique d'identification forment l'élément dynamique d'identification.

14. Etiquette RFID (20a, 20b) destinée à la communication avec un appareil de lecture (30a, 30b), cependant que l'étiquette RFID (20a, 20b) est conçue pour exécuter le procédé selon une des revendications de 1 à 13.

15. Appareil de lecture (30a, 30b) destiné à la communication avec une étiquette RFID (20a, 20b), cependant que l'appareil de lecture (30a, 30b) est conçu pour exécuter le procédé selon une des revendications de 1 à 13.
